# EUROPEAN PATENT SPECIFICATION

(11) **EP 3 113 269 B1**
(45) Date of publication and mention of the grant of the patent: **21.11.2018**
(21) Application number: 16174497.4
(22) Date of filing: 15.06.2016
(51) Int. Cl.: H01M 8/04014, H01M 8/04664, H01M 8/04746, H01M 8/0612, H01M 8/0662, H01M 8/04537

(54) **FUEL CELL SYSTEM**
BRENNSTOFFZELLENSYSTEM
SYSTÈME DE PILE À COMBUSTIBLE

(30) Priority: 29.06.2015 JP 2015129718
(43) Date of publication of application: 04.01.2017
(73) Proprietor: AISIN SEIKI KABUSHIKI KAISHA, Kariya-shi, Aichi 448-8650 (JP)
(72) Inventor: GOTO, Shunsuke, Kariya-shi, Aichi 448-8650 (JP); ICHIKAWA, Masaki, Kariya-shi, Aichi 448-8650 (JP); FUNATSU, Yoshinori, Kariya-shi, Aichi 448-8650 (JP); ENDO, Satoshi, Kariya-shi, Aichi 448-8650 (JP); TSUKADA, Yasunori, Nagoya-shi, Aichi 450-0003 (JP); MATSUOKA, Akira, Kariya-shi, Aichi 448-8650 (JP)
(74) Representative: TBK

(56) References cited:
- EP-A1- 2 256 850
- EP-A1- 2 922 131
- EP-A2- 2 639 873
- EP-A2- 2 639 874

## Description

### TECHNICAL FIELD

This disclosure relates to a fuel cell system.

### BACKGROUND DISCUSSION

There is a fuel cell system disclosed in JP 2010 153063 A (Reference 1) as a type of a known fuel cell system. As illustrated in Fig. 1 and Fig. 2 of Reference 1, the fuel cell system includes a fuel cell module 25 which accommodates a fuel cell 1, an in-module temperature sensor 24 which detects a temperature inside the fuel cell module 25, a firing up device 23 for burning combustion gas (combustible gas) unused in the fuel cell 1, and a control device 14 which controls operations of the firing up device 23. In a case where the in-module temperature sensor 24 detects that the temperature inside the fuel cell module 25 is lower than a predetermined temperature, the control device 14 determines that incomplete combustion of combustible gas has occurred due to the occurrence of blowing off, by which a combustion state of the combustible gas is dissolved partially or in its entirety, and operates the firing up device 23 to burn the combustible gas. With this, it is possible to suppress carbon monoxide or the like from being generated due to incomplete combustion of the combustible gas.

In the fuel cell system of Reference 1 described above, in a case where a power generation amount of the fuel cell 1 is small and thus a flow rate of fuel supplied to the fuel cell 1 is relatively small, a flow rate of the combustible gas unused in the fuel cell 1 also becomes small. In a case where blowing off occurs in such a state and the control device 14 operates the firing up device 23, the flow rate of the combustible gas is small and thus, the combustible gas may not be reliably fired up again.

There are other types of fuel cell systems disclosed in EP 2 639 873 A2 (Reference 2), EP 2 639 874 A2 (Reference 3), EP 2 256 850 A1 (Reference 4), and post-published EP 2 922 131 A1 (Reference 5). The fuel cell systems of References 2 to 5 comprise: a fuel cell for generating electric power using a fuel and an oxidizer gas, the fuel being reforming raw material which is supplied from a supply source and is reformed; a fuel supply device for supplying the fuel to the fuel cell; a combustion unit for burning combustible gas led out from the fuel cell using the oxidizer gas; an ignition device for igniting the combustible gas introduced into the combustion unit to fire up the combustion unit; and a control device for controlling the fuel cell.

In the fuel cell system of Reference 2, the reforming raw material is supplied at a constant supply flow rate to the fuel cell, thereby obtaining a supply flow rate deviation from a temperature deviation that is a difference between a reference temperature of the combustion unit and a temperature of the combustion unit detected by a temperature sensor during a period in which the temperature is stable. Thereafter, the supply flow rate of the reforming raw material is adjusted on the basis of the supply flow rate deviation obtained from the temperature deviation. Thus, the temperature of the combustion unit, which is sensitive to the supply flow rate of the reforming raw material, is utilized; thereby, a flow sensor for detecting a flow rate of the reforming raw material may be accurately calibrated.

In the fuel cell system of Reference 5, the control device corrects a flow rate of the reforming raw material based on tolerances of a flow sensor detecting the flow rate at a time a flame extinction occurs at the combustion unit. Further, the control device controls the fuel supply device so as to supply the reforming raw material at the corrected flow rate for reigniting the combusting portion. As a result, in a case where the combustion unit is reignited because the flame extinction occurs at the combustion unit, the combustion unit is shifted from a flame extinction range to a combustion range. Thus, a combustion performance of the combustion unit may be ensured even in a case where a carbon monoxide concentration sensor is omitted.

### SUMMARY

A need exists for a fuel cell system which is capable of reliably re-firing up a combustion unit even in a case where the combustion unit is blown off when a flow rate of fuel supplied to a fuel cell is relatively small.

A fuel cell system according to an aspect of this disclosure includes the features set forth in claim 1.

The fuel cell system according to the aspect of this disclosure may further include the features set forth in any one of the dependent claims 2 to 5.

According to the aspect of this disclosure, in a case where the combustion unit is blown off when the power generation amount of the fuel cell is small and the flow rate of fuel supplied to the fuel cell is relatively small during the power generation operation of the fuel cell system, it is determined, by the blow-off determination unit, that blowing off of the combustion unit has occurred and the first ignition unit increases the flow rate of fuel in a stepwise manner and increases the flow rate of the combustible gas. It is possible to allow the combustion unit to be in a state capable of being easily ignited. Therefore, even in a case where blowing off occurs when the flow rate of fuel supplied to the fuel cell is relatively small, the combustion unit may be reliably fired up again.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating a first embodiment of a fuel cell system disclosed here;
Fig. 2 is a block diagram of the fuel cell system illustrated in Fig. 1;
Fig. 3 is a flowchart executed by a control device illustrated in Fig. 2;
Fig. 4 is a flowchart continued from the flowchart illustrated in Fig. 3;
Fig. 5 is a time chart illustrating operations of the fuel cell system in the flowchart illustrated in Fig. 3;
Fig. 6 is a block diagram of a fuel cell system according to a second embodiment disclosed here;
Fig. 7 is a portion of a flowchart executed by the control device illustrated in Fig. 6;
Fig. 8 is a block diagram of a fuel cell system according to a modification example of the second embodiment disclosed here;
Fig. 9 is a portion of a flowchart executed by the control device illustrated in Fig. 8;
Fig. 10 is a block diagram of a fuel cell system according to a third embodiment disclosed here;
Fig. 11 is a portion of a flowchart executed by the control device illustrated in Fig. 10;
Fig. 12 is a block diagram of a fuel cell system according to a first modification example of the third embodiment disclosed here;
Fig. 13 is a flowchart executed by the control device illustrated in Fig. 12;
Fig. 14 is a flowchart continued from the flowchart illustrated in Fig. 13; and
Fig. 15 is a portion of a flowchart executed by the control device of a fuel cell system according to a modification example of the first embodiment disclosed here.

### DETAILED DESCRIPTION

### First Embodiment

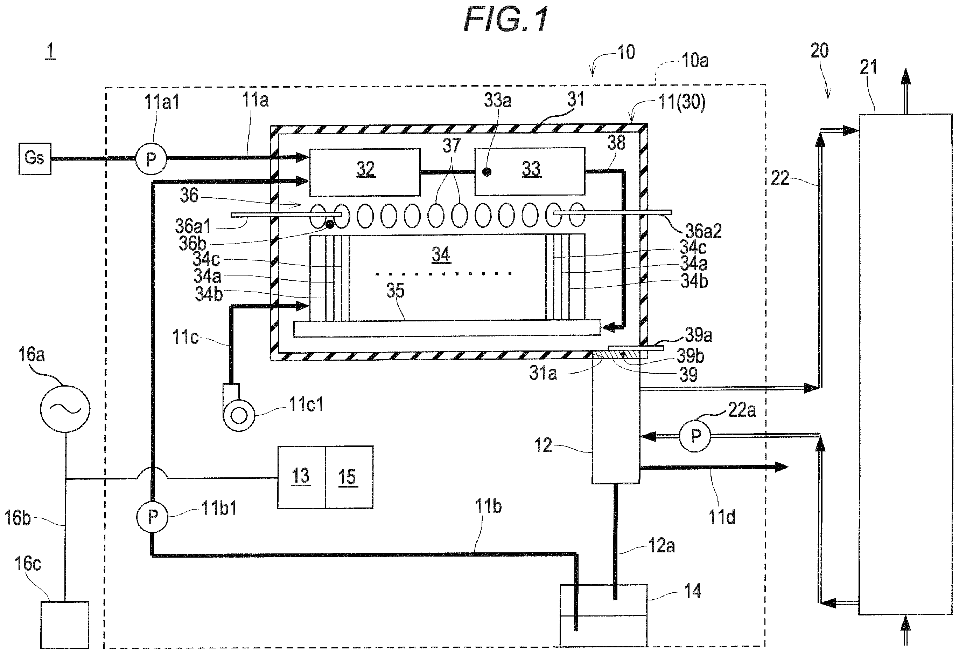

Hereinafter, a first embodiment of a fuel cell system disclosed here will be described. As illustrated in Fig. 1, a fuel cell system 1 includes a power generation unit 10 and a hot water storage tank 21. The power generation unit 10 includes a case 10a, a fuel cell module 11 (30), a heat exchanger 12, an inverter device 13, a water tank 14, and a control device 15.

The fuel cell module 11 is configured to include at least a fuel cell 34 which will be described later. Fuel, reforming water, and oxidizer gas are supplied to the fuel cell module 11. A fuel cell 34 includes a fuel electrode to which fuel is supplied and an oxidizer electrode to which oxidizer gas is supplied and generates electric power using the fuel and the oxidizer gas. In the present embodiment, the fuel supplied to the fuel electrode is reforming gas generated in a reforming unit 33 from reforming raw material which is supplied from a supply source Gs and from water vapor which is generated in an evaporator 32 from reforming water.

The fuel cell module 11 is connected to the other end of a reforming raw material supply pipe 11a of which one end is connected to the supply source Gs to be supplied with the reforming raw material. The reforming raw material supply pipe 11a is provided with a raw material pump 11a1 (which corresponds to a fuel supply device disclosed here). The raw material pump 11a1 is a reforming raw material supply device which supplies the reforming raw material to the fuel cell module 11 and adjusts a flow rate (flow rate per unit of time) of the reforming raw material supplied from the supply source Gs according to a control command value from a control device 15. The raw material pump 11a1 is a pressure feed device which sucks up the reforming raw material and feeds the reforming raw material to the fuel cell module 11 by pressure. The raw material pump 11a1 undergoes PWM control and thus, the command control value is calculated for a duty ratio.

The fuel cell module 11 is connected to the other end of a water supply pipe 11b of which one end is connected to the water tank 14 to be supplied with the reforming water. A water supply pipe 11b is provided with a reforming water pump 11b1. The reforming water pump 11b1 is a reforming water supply device which supplies the reforming water to the fuel cell module 11 and adjusts a flow rate (flow rate per unit of time) of the reforming water supplied from the water tank 14 according to a control command value from the control device 15. The reforming water pump 11b1 is a pressure feed device which sucks up the reforming water and feeds the reforming water to the fuel cell module 11 by pressure.

The fuel cell module 11 is connected to the other end of a cathode air supply pipe 11c of which one end is connected to a cathode air blower 11c1 (which corresponds to an oxidizer gas supply device disclosed here) to be supplied with air (cathode air) which is oxidizer gas. The cathode air blower 11c1 is an air supply device which supplies air to the fuel cell module 11 and adjusts a flow rate (flow rate per unit of time) of air according to a control command value from the control device 15. The cathode air blower 11c1 is a pressure feed device which sucks up air within the case 10a and feeds the air to the fuel cell module 11 by pressure.

The heat exchanger 12 is a heat exchanger to which combustion exhaust gas discharged from the fuel cell module 11 and stored hot water from a hot water storage tank 21 are supplied and in which heat exchange is performed between the combustion exhaust gas and the stored hot water. Specifically, the hot water storage tank 21 stores hot water and is connected with a stored hot water circulation line 22 in which the stored hot water is circulated (circulated in a direction denoted by an arrow in the figure). A stored hot water circulating pump 22a and the heat exchanger 12 are arranged on the stored hot water circulation line 22 in this order from a lower end of the hot water storage tank 21 toward an upper end. The heat exchanger 12 is connected with an exhaust port 31a of the fuel cell module 11. The heat exchanger 12 is connected with the exhaust pipe 11d opened to the outside of the power generation unit 10 and a condensed water supply pipe 12a which is connected to the water tank 14.

In the heat exchanger 12, the combustion exhaust gas exhausted from the fuel cell module 11 is introduced into the heat exchanger 12 through the exhaust port 31a, subjected to the heat exchange with the stored hot water, condensed, and cooled down. The combustion exhaust gas after the condensation is discharged to the outside through an exhaust pipe 11d. The condensed water is supplied to the water tank 14 through the condensed water supply pipe 12a. In the water tank 14, the condensed water is purified by ion exchange resin.

An exhaust heat recovery system 20 is constituted with the heat exchanger 12 described above, the hot water storage tank 21, and the stored hot water circulation line 22. The exhaust heat recovery system 20 recovers the exhaust heat of the fuel cell module 11 into the stored hot water to be accumulated.

The inverter device 13 receives a DC voltage which is output from the fuel cell 34 as an input, converts the input DC voltage into a predetermined AC voltage, and outputs the predetermined AC voltage to a power supply line 16b connected to an AC system power source 16a and an external electric power load 16c (for example, electrical products). The inverter device 13 receives the AC voltage from the system power source 16a through the power supply line 16b as an input, converts the input AC voltage into a predetermined DC voltage, and outputs the predetermined DC voltage to an auxiliary machine (each pump, blower, or the like) and the control device 15. The control device 15 drives the auxiliary machine to control the operation of the fuel cell system 1.

The fuel cell module 11 (30) includes a casing 31, the evaporating unit 32, the reforming unit 33, and the fuel cell 34. The casing 31 is formed of insulating material in a box shape.

The evaporating unit 32 generates water vapor from the reforming water. The evaporating unit 32 is heated by combustion gas to be described later, evaporates the reforming water supplied to generate water vapor, and preheats the supplied reforming raw material. The evaporating unit 32 mixes the water vapor generated by evaporating the reforming water and the preheated reforming raw material to be supplied to the reforming unit 33. The reforming raw material includes city gas composed mainly of natural gas (methane gas), a reforming gas fuel such as liquefied petroleum gas (LP gas) composed mainly of propane, and a reforming liquid fuel such as kerosene, gasoline, methanol, or the like. Description will be made on city gas in the embodiment disclosed here.

The evaporating unit 32 is connected to the other end of the water supply pipe 11b of which one end (lower end) is connected to the water tank 14. The evaporating unit 32 is connected to the reforming raw material supply pipe 11a of which one end is connected to the supply source Gs. The supply source Gs is, for example, a gas supply pipe for city gas or a gas cylinder for LP gas.

The reforming unit 33 generates reforming gas from the reforming raw material and the water vapor and supplies the reforming gas to the fuel cell 34. The reforming unit 33 generates reforming gas from the mixed gas (reforming raw material and water vapor) supplied from the evaporating unit 32 and leads out the reforming gas by being supplied with heat required for a reforming reaction of water vapor heated by the combustion gas to be described later. The reforming unit 33 is filled with the reforming catalyst (for example, Ru or Ni based catalyst or Pt or Rh based catalyst) and in the reforming unit 33, mixed gas is reacted by the reforming catalyst to be reformed and gas which contains hydrogen gas and carbon monoxide gas is generated (so-called water vapor reforming reaction). The reforming gas contains hydrogen, carbon monoxide, carbon dioxide, water vapor, unreformed natural gas (methane gas), and the reforming water (water vapor) not used for reforming. The water vapor reforming reaction is an endothermic reaction. The reforming unit temperature sensor 33a is arranged inside of the reforming unit 33. A reforming unit temperature sensor 33a detects the internal temperature of the reforming unit 33. Specifically, the reforming unit temperature sensor 33a detects the temperature of a location where the reforming unit temperature sensor 33a is arranged inside of the reforming unit 33. The reforming unit temperature sensor 33a is arranged at an introduction port to which the mixed gas is introduced in the reforming unit 33. The reforming unit temperature sensor 33a transmits the detection result to the control device 15.

The fuel cell 34 generates the electric power using the reforming gas and the oxidizer gas. The fuel cell 34 is configured in such a way that a plurality of cells 34a formed with a fuel electrode, an air electrode (oxidizer electrode), and an electrolyte interposed between the electrodes are stacked. The fuel cell of the present embodiment is a solid oxide fuel cell and zirconium oxide which is a type of solid oxide is used as the electrolyte. Hydrogen, carbon monoxide gas, methane gas, or the like is supplied, as fuel, to the fuel electrode of the fuel cell 34.

A fuel flow passage 34b through which the reforming gas, which is fuel, passes is formed at the fuel electrode sides of the cell 34a. An air flow passage 34c through which air (cathode air) passes is formed at the air electrode sides of the cell 34a.

The fuel cell 34 is provided on a manifold 35. The reforming gas from the reforming unit 33 is supplied to the manifold 35 through a reforming gas supply pipe 38. The fuel flow passage 34b is formed in such a way that the lower end (one end) of the fuel flow passage is connected to the fuel lead-out port of the manifold 35 and the reforming gas led out from the fuel lead-out port is introduced from the lower end and led out from the upper end. Air delivered by the cathode air blower 11c1 is supplied through the cathode air supply pipe 11c and introduced from the lower end of the air flow passage 34c and led out from the upper end thereof.

A first combustion unit 36 (which corresponds to the combustion unit disclosed here) is provided between the fuel cell 34, the evaporating unit 32, and the reforming unit 33. The first combustion unit 36 burns the combustible gas led out from the fuel electrode of the fuel cell 34 using the oxidizer gas. The first combustion unit 36 corresponds to a combustion space in which the combustible gas is burned. The combustible gas is anode off gas which is reforming gas unused for the power generation of the fuel cell 34. The oxidizer gas is cathode off gas which is air (cathode air) unused for the power generation of the fuel cell 34. The first combustion unit 36 burns the anode off gas and the cathode off gas to heat the evaporating unit 32 and the reforming unit 33. In the first combustion unit 36, the anode off gas is burned and the combustion gas (flame 37) is generated. In the first combustion unit 36, the anode off gas is burned and the combustion exhaust gas is generated. The combustion exhaust gas is exhausted from the fuel cell module 30 through the exhaust port 31a.

The first combustion unit 36 is provided with a pair of ignition heaters 36a1 and 36a2 (which corresponds to the ignition device disclosed here). The ignition heaters 36a1 and 36a2 ignite the anode off gas introduced into the first combustion unit 36 to fire up the first combustion unit 36. Ignition is the phenomena of initiating a combustible target (anode off gas) to be caught on fire. Firing up is when a target (first combustion unit 36) is engulfed in flame in a state where the flame is continuous (combustion state). The ignition heaters 36a1 and 36a2 are an AC heater (AC heater: AC auxiliary device) heated by AC current according to instruction from the control device 15. The first ignition heater 36a1 is arranged between the fuel cell 34 and the evaporating unit 32. The second ignition heater 36a2 is arranged between the fuel cell 34 and the reforming unit 33.

A first combustion unit temperature sensor 36b is arranged in the first combustion unit 36. The first combustion unit temperature sensor 36b detects the temperature of the first combustion unit 36. Specifically, the first combustion unit temperature sensor 36b detects the temperature of a location where the first combustion unit temperature sensor 36b is arranged in the first combustion unit 36. The first combustion unit temperature sensor 36b is arranged between the fuel cell 34 and the first ignition heater 36a1 in the first combustion unit 36. The first combustion unit temperature sensor 36b transmits the detection result to the control device 15.

In the casing 31, a second combustion unit 39 is provided in the exhaust port 31a. The second combustion unit 39 introduces the combustible gas unburned (hereinafter, referred to as unburned combustible gas) in the first combustion unit 36, burns the combustible gas, and leads out the combustible gas. The unburned combustible gas is, for example, hydrogen, methane gas, carbon monoxide gas, or the like. The second combustion unit 39 is constituted with the combustion catalyst (for example, catalysts of ceramic honey comb or metal honeycomb and noble metal) which is the catalyst to burn the unburned combustible gas.

The second combustion unit 39 is provided with the combustion catalyst heater 39a and a second combustion unit temperature sensor 39b. The combustion catalyst heater 39a burns the unburned combustible gas to heat the combustion catalyst. The combustion catalyst heater 39a heats the combustion catalyst to an active temperature of the catalyst. The combustion catalyst heater 39a is an AC heater (AC heater: AC auxiliary device) to heat the combustion catalyst by AC current according to instruction from the control device 15.

The second combustion unit temperature sensor 39b detects the temperature of the second combustion unit 39. Specifically, the second combustion unit temperature sensor 39b detects the temperature of a location where the second combustion unit temperature sensor 39b is arranged in the second combustion unit 39. The second combustion unit temperature sensor 39b transmits the detection result to the control device 15.

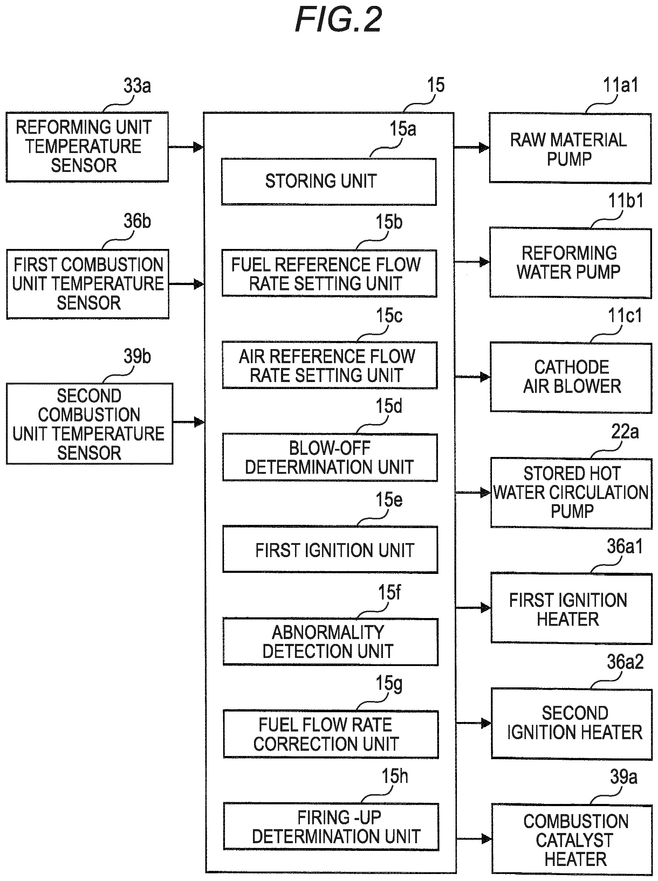

The control device 15 at least controls the fuel cell 34. The control device 15, as illustrated in Fig. 2, is connected with respective temperature sensors 33a, 36b, and 39b, respective pumps 11a1, 11b1, and 22a, the cathode air blower 11c1, the ignition heaters 36a1 and 36a2, and a combustion catalyst heater 39a. The control device 15 includes a storing unit 15a, a fuel reference flow rate setting unit 15b, an air reference flow rate setting unit 15c (which corresponds to the oxidizer gas flow rate setting unit disclosed here), a blow-off determination unit 15d, a first ignition unit 15e, and an abnormality detection unit 15f, a fuel flow rate correction unit 15g, and a firing up determination unit 15h.

The storing unit 15a stores data used when executing a control program. A first map and a second map are stored in the storing unit 15a.

The first map represents a first correlation between a fuel reference flow rate Qfk and the power generation amount of the fuel cell 34. The fuel reference flow rate Qfk is a flow rate serving as a reference of reforming raw material according to the power generation amount of the fuel cell 34. The first correlation indicates a relationship in which the fuel reference flow rate Qfk increases as the power generation amount gradually increases such that the reforming gas needed for the power generation of the fuel cell 34 is supplied. The first correlation is derived by being measured by experiments or the like in advance.

The second map represents a second correlation between an air reference flow rate Qak and the power generation amount of the fuel cell 34. The air reference flow rate Qak is a flow rate serving as a reference of air (cathode air) according to the power generation amount of the fuel cell 34. The second correlation indicates a relationship in which the air reference flow rate Qak increases as the power generation amount gradually increases such that air needed for the power generation of the fuel cell 34 is supplied. The second correlation is derived by being measured by experiments or the like in advance.

The fuel reference flow rate setting unit 15b, during the power generation operation of the fuel cell system 1, sets the target flow rate of the reforming raw material (hereinafter, referred to as the fuel target flow rate Qft) supplied to the fuel cell 34 to the fuel reference flow rate Qfk on the basis of the power generation amount of the fuel cell 34. The fuel reference flow rate setting unit 15b derives the fuel reference flow rate Qfk from the power generation amount of the fuel cell 34 on the basis of the first map.

The air reference flow rate setting unit 15c, during the power generation operation of the fuel cell system 1, sets a target flow rate of air (hereinafter, referred to as air target flow rate Qat), which is supplied to the fuel cell 34, to the air reference flow rate Qak on the basis of the power generation amount of the fuel cell 34. The air reference flow rate setting unit 15c derives the air reference flow rate Qak from the power generation amount of the fuel cell 34 on the basis of the second map.

The blow-off determination unit 15d determines whether blowing off, by which a combustion state of the first combustion unit 36 is dissolved partially or in its entirety, has occurred or not (which will be described later).

The first ignition unit 15e increases a fuel target flow rate Qft in a stepwise manner from a fuel reference flow rate Qfk, which is set by the fuel reference flow rate setting unit 15b and performs ignition of the combustible gas (anode off gas) by the ignition heaters 36a1 and 36a2, in a case where it is determined, by the blow-off determination unit 15d, that blowing off of the first combustion unit 36 has occurred, during the power generation operation of the fuel cell system 1 (which will be described later).

The abnormality detection unit 15f detects that abnormality is present in the fuel cell system 1 in a case where the fuel target flow rate Qft reaches a predetermined flow rate in a state where the first combustion unit 36 is not fired up even by the ignition of combustible gas (anode off gas) by the first ignition unit 15e after it is determined, by the blow-off determination unit 15d, that blowing off of the first combustion unit 36 has occurred, during the power generation operation of the fuel cell system 1. The predetermined flow rate corresponds to the fuel upper limit flow rate QfU in the present embodiment (which will be described later). Abnormalities in the fuel cell system 1 include, for example, abnormality of the raw material pump 11a1 due to change overtime, abnormality of the temperature sensor, and reforming raw material leakage from the reforming raw material supply pipe 11a.

The fuel flow rate correction unit 15g corrects the fuel reference flow rate Qfk (which will be described later) in a case where firing up of the first combustion unit 36 and blowing off of the first combustion unit 36 are repeated the predetermined number of times n within a second predetermined time Ts2 (which corresponds to a predetermined time disclosed here) during the power generation operation of the fuel cell system 1.

The firing up determination unit 15h determines whether the first combustion unit 36 is fired up or not in a case where the combustible gas (anode off gas) is ignited by the ignition heaters 36a1 and 36a2 in a state where the first combustion unit 36 is not fired up (which will be described later).

Next, descriptions will be made on an example of basic operations in a case where an electric power transmission is performed by a system power source16a of the fuel cell system 1 described above. The control device 15 starts the startup operation in a case where a start switch (not illustrated) is depressed to start operation or in a case where operation is started according to an operation plan.

When the start up operation is started, the control device 15 operates the auxiliary machine. Specifically, the control device 15 operates the pumps 11a1 and 11b1 and starts supplying of the reforming raw material and the reforming water to the evaporating unit 32. As described above, the mixed gas is generated in the evaporating unit 32 and the mixed gas is supplied to the reforming unit 33. The reforming gas is generated from the supplied mixed gas in the reforming unit 33 and the reforming gas is supplied to the fuel cell 34. The control device 15 turns the ignition heaters 36a1 and 36a2 on and thus, the ignition heaters 36a1 and 36a2 are heated. With this, the anode off gas led out from the fuel cell 34 is ignited and the first combustion unit 36 is fired up. The control device 15 turns the combustion catalyst heater 39a on and thus, the combustion catalyst heater 39a is heated. With this, the combustion catalyst is heated in the second combustion unit 39. If the temperature of the reforming unit 33 becomes greater than or equal to the predetermined temperature, the startup operation is finished, and the power generation operation is started. In the present embodiment, the predetermined temperature is, for example, 400°C.

The control device 15 controls the auxiliary device such that the power generated by the fuel cell 34 becomes a power consumption of an external electric power load 16c during the power generation operation and supplies the reforming raw material and the cathode air (air) to the fuel cell module 30 and the fuel cell 34. In this case, the fuel target flow rate Qft is set to the fuel reference flow rate Qfk according to the power generation amount of the fuel cell 34 by the fuel reference flow rate setting unit 15b. The air target flow rate Qat is set to the air reference flow rate Qak according to the power generation amount of the fuel cell 34 by the air reference flow rate setting unit 15c. In a case where the power consumption of the external electric power load 16c exceeds the power generated by the fuel cell 34, the shortage of the electric power capacity is supplemented by receiving the electric power from the system the power source 16a.

Next, description will be made on operations for which it is determined, by the control device 15 (blow-off determination unit 15d), that blowing off of the first combustion unit 36 has occurred in a case where the first combustion unit 36 being fired up is blown off during the power generation operation of the fuel cell system 1. First, description will be made on a case where the first combustion unit 36 is blown off in its entirety. In a case where the first combustion unit 36 is blown off in its entirety, the temperatures of the inside of the reforming unit 33 and the first combustion unit 36 are decreased and thus, the temperatures detected by the reforming unit temperature sensor 33a and the first combustion unit temperature sensor 36b are decreased. In a case where the detection temperature of the reforming unit temperature sensor 33a becomes equal to or less than a first determination temperature, or in a case where the detection temperature of the first combustion unit temperature sensor 36b becomes equal to or less than a second determination temperature, the control device 15 determines that blowing off of the first combustion unit 36 has occurred. In a case where the first combustion unit 36 is blown off in its entirety, an amount of unburned combustible gas generated in the first combustion unit 36 is increased and thus, an amount of unburned combustible gas to be burned by the second combustion unit 39 is increased. In this case, the detection temperature of the second combustion unit temperature sensor 39b is increased. In a case where the detection temperature of the second combustion unit temperature sensor 39b becomes greater than or equal to a third determination temperature, the control device 15 determines that blowing off of the first combustion unit 36 has occurred. Respective determination temperatures are derived by being measured by experiments or the like in advance.

Next, description will be made on a case where the first combustion unit 36 is partially blown off. In a case where a portion, which heats the reforming unit 33, of the first combustion unit 36 is partially blown off, the temperature of the inside of the reforming unit 33 is decreased and thus, the detection temperature of the reforming unit temperature sensor 33a is decreased. In a case where the detection temperature of the reforming unit temperature sensor 33a becomes equal to or less than the first determination temperature, the control device 15 determines that blowing off of the first combustion unit 36 has occurred.

In a case where a portion, at which a temperature of the first combustion unit 36 can be detected by the first combustion unit temperature sensor 36b, of the first combustion unit 36 is partially blown off, the temperature of the portion of the first combustion unit 36 is decreased and thus, the detection temperature of the reforming unit temperature sensor 33a is decreased. In a case where the temperature detected by the first combustion unit temperature sensor 36b becomes equal to or less than the second determination temperature, the control device 15 determines that blowing off of the first combustion unit 36 has occurred.

In a case where the first combustion unit 36 is partially blown off, as described above, the detection temperature of the second combustion unit temperature sensor 39b is increased. In a case where, the temperature detected by the second combustion unit temperature sensor 39b becomes greater than or equal to a third determination temperature, the control device 15 determines that blowing off of the first combustion unit 36 has occurred.

On the other hand, in a case where the detection temperature of the reforming unit temperature sensor 33a is higher than the first determination temperature, the detection temperature of the first combustion unit temperature sensor 36b is higher than the second determination temperature, and, the detection temperature of the second combustion unit temperature sensor 39b is lower than the third determination temperature, the control device 15 determines that blowing off of the first combustion unit 36 has not occurred.

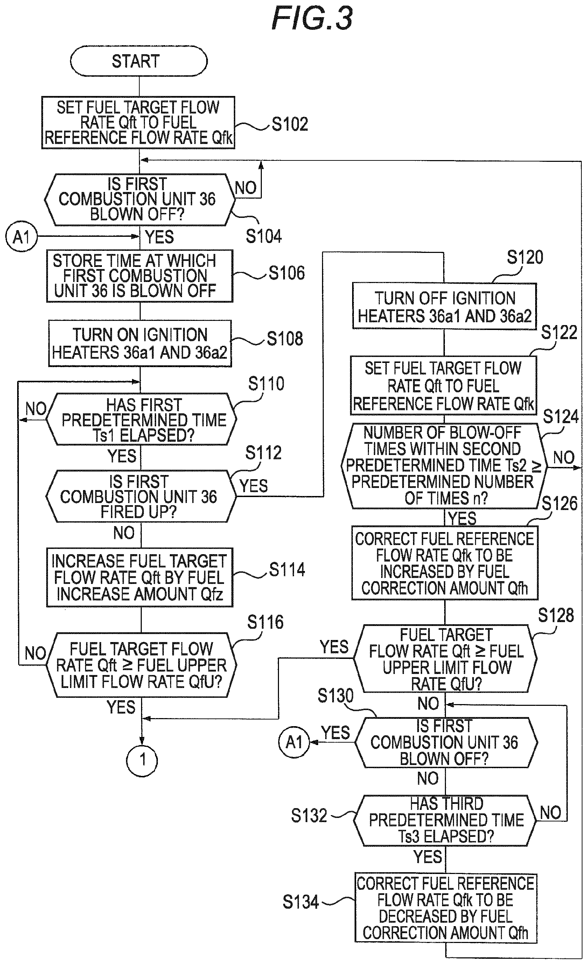

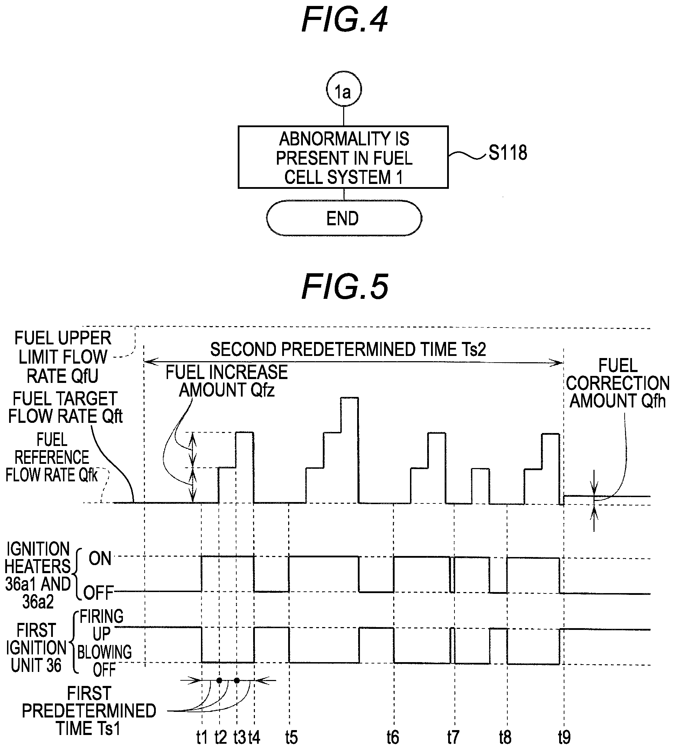

Next, description will be made on a re-firing up control for firing up the first combustion unit 36 again by the control device 15 in a case where the first combustion unit 36 being fired up is blown off during the power generation operation of the fuel cell system 1 described above, in line with flowcharts illustrated in Fig. 3 and Fig. 4. In the first embodiment disclosed here, "1" which is an encircled coupling reference numeral illustrated in Fig. 3 is coupled only with the encircled coupling reference numeral "1a" illustrated in Fig. 4.

Description will be made on a state where the fuel cell system 1 is in the power generation operation and the first combustion unit 36 is fired up first. The control device 15 continues to perform the power generation operation by setting the fuel target flow rate Qft to the fuel reference flow rate Qfk (Step S102). The control device 15 determines whether the first combustion unit 36 is blown off in Step S104 (blow-off determination unit 15d). The control device 15, as described above, determines that the first combustion unit 36 is not blown off in a case where the detection temperature of the reforming unit temperature sensor 33a is higher than the first determination temperature, the detection temperature of the first combustion unit temperature sensor 36b is higher than the second determination temperature, and, the detection temperature of the second combustion unit temperature sensor 39b is lower than the third determination temperature. In this case, the control device 15 determines that the determination result is "NO" in Step S104 and repeatedly executes Step S104.

On the other hand, the control device 15, as described above, determines that the first combustion unit 36 is blown off in a case where the detection temperature of the reforming unit temperature sensor 33a is equal to or less than the first determination temperature, in a case where the detection temperature of the first combustion unit temperature sensor 36b is equal to or less than the second determination temperature, or in a case where the detection temperature of the second combustion unit temperature sensor 39b is greater than or equal to the third determination temperature. In this case, the control device 15 determines that the determination result is "YES" in Step S104 and causes the program to proceed to Step S106.

The control device 15 stores the time at which the first combustion unit 36 is blown off in Step S106 (storing unit 15a), increases the fuel target flow rate Qft in a stepwise manner and performs ignition of the anode off gas in Steps S108 to S116 (first ignition unit 15e), and determines whether the first combustion unit 36 is fired up or not (firing up determination unit 15h). Specifically, the control device 15, in Step S108, turns the ignition heaters 36a1 and 36a2 on (first ignition unit 15e) to heat the ignition heaters 36a1 and 36a2. The control device 15 determines whether the first predetermined time Ts1 has elapsed in Step S110. The first predetermined time Ts1 is, for example, one minute. In a case where the first predetermined time Ts1 has not elapsed, the control device 15 determines that the determination result is "NO" in Step S110 and repeatedly executes Step S110. On the other hand, in a case where the first predetermined time Ts1 has elapsed, the control device 15 determines that the determination result is "YES" in Step S110 and causes the program to proceed to Step S112.

The control device 15 determines whether the first combustion unit 36 is fired up or not in Step S112 (firing up determination unit 15h). The control device 15 determines that the first combustion unit 36 is not fired up in a case where the detection temperature of the reforming unit temperature sensor 33a is lower than a fourth determination temperature or in a case where the detection temperature of the first combustion unit temperature sensor 36b is lower than a fifth determination temperature. The fourth determination temperature and the fifth determination temperature are derived by being measured by experiments or the like in advance. In this case, the control device 15 determines that the determination result is "NO" in Step S112 and increases the fuel target flow rate Qft by a fuel increase amount Qfz in Step S114 (first ignition unit 15e). The fuel increase amount Qfz is set on the basis of an air fuel ratio of reforming raw material. The fuel increase amount Qfz is set to, for example, 5% of the fuel reference flow rate Qfk.

The control device 15 determines whether the fuel target flow rate Qft is greater than or equal to a fuel upper limit flow rate QfU in Step S116. The fuel upper limit flow rate QfU is set to a flow rate which is greater than the flow rate of reforming raw material which corresponds to the maximum output of the fuel cell 34. In a case where the fuel target flow rate Qft is greater than or equal to the fuel upper limit flow rate QfU, the control device 15 determines that the determination result is "YES" in Step S116 and detects that abnormality is present in the fuel cell system 1 in Step S118 (see Fig. 4) (abnormality detection unit 15f). It is considered that abnormality present in the fuel cell system 1 includes, for example, abnormality of the raw material pump 11a1 due to a change over time, abnormality of the temperature sensors 33a, 36b, and 39b, reforming raw material leakage, or the like.

On the other hand, in a case where the fuel target flow rate Qft is less than the fuel upper limit flow rate QfU, the control device 15 determines that the determination result is "NO" in Step S116 and causes the program to be returned to Step S110. As such, in a case where the first combustion unit 36 is not fired up, the control device 15 increases the fuel target flow rate Qft in a stepwise manner and performs ignition of the anode off gas until the fuel target flow rate Qft becomes greater than or equal to the fuel upper limit flow rate QfU.

In a case where the detection temperature of the reforming unit temperature sensor 33a is greater than or equal to the fourth determination temperature and the detection temperature of the first combustion unit temperature sensor 36b is greater than or equal to the fifth determination temperature, the control device 15 determines that the first combustion unit 36 is fired up. In this case, the control device 15 determines that the determination result is "YES" in Step S112 and causes the program to proceed to Step S120.

The control device 15 turns the ignition heaters 36a1 and 36a2 off in Step S120 and sets the fuel target flow rate Qft to the fuel reference flow rate Qfk in Step S122. That is, the control device 15 returns the fuel target flow rate Qft to a state before being increased in a stepwise manner. The control device 15 determines whether the number of blow-off times within the second predetermined time Ts2 is greater than or equal to the predetermined number of times n in Step S124. The second predetermined time Ts2 is, for example, three hours. The number of blow-off times is the number of times that the first combustion unit 36 being fired up is blown off. The predetermined number of times n is, for example, five. Specifically, the control device 15 derives the number of blow-off times between the current point in time and a certain point in time, which is earlier than the second predetermined time Ts2, on the basis of the time which is stored in the storing unit 15a and at which the first combustion unit 36 is blown off. In a case where the number of blow-off times is less than the predetermined number of times n, the control device 15 determines that the determination result is "NO" in Step S124 and causes the program to proceed to Step S104.

On the other hand, the control device 15 determines that the determination result is "YES" in Step S124 in a case where the number of blow-off times is greater than or equal to the predetermined number of times n. In this case, it is considered that firing up of the first combustion unit 36 by the first ignition unit 15e and blowing off of the first combustion unit 36 are frequently repeated and thus, the actual flow rate of the anode off gas and the actual flow rate of the reforming raw material are insufficient. The control device 15 corrects the fuel reference flow rate Qfk to be increased by the fuel correction amount Qfh in Step S126 (fuel flow rate correction unit 15g). The fuel correction amount Qfh is set on the basis of an air fuel ratio of reforming raw material. The fuel correction amount Qfh is set to, for example, 1% of the fuel reference flow rate Qfk. As such, in a case where firing up of the first combustion unit 36 by the first ignition unit 15e and blowing off of the first combustion unit 36 are frequently repeated, the control device 15 corrects the fuel reference flow rate Qfk to be increased.

The control device 15 determines whether the fuel target flow rate Qft is greater than or equal to the fuel upper limit flow rate QfU in Step S128. In a case where the fuel target flow rate Qft is greater than or equal to the fuel upper limit flow rate QfU, the control device 15 determines that the determination result is "YES" in Step S128 and detects that abnormality is present in the fuel cell system 1 (abnormality detection unit 15f) in Step S118 (see Fig. 4). On the other hand, in a case where the fuel target flow rate Qft is less than the fuel upper limit flow rate QfU, the control device 15 determines that the determination result is "NO" in Step S128 and determines whether the first combustion unit 36 is blown off in Step S130 (blow-off determination unit 15d). In a case where the first combustion unit 36 is blown off, the control device 15 determines that the determination result is "YES" in Step S130, causes the program to be returned to Step S106, and increases the fuel target flow rate Qft in a stepwise manner and performs ignition of the anode off gas (Steps S106 to S116).

On the other hand, in a case where the first combustion unit 36 is not blown off, the control device 15 determines that the determination result is "NO" in Step S130 and determines whether the third predetermined time Ts3 has elapsed. The third predetermined time Ts3 is, for example, fifteen minutes. In a case where the third predetermined time Ts3 has not elapsed, the control device 15 determines that the determination result is "NO" in Step S132 and causes the program to be returned to Step S130. As such, the control device 15 repeatedly executes Steps S130 and S132 until the third predetermined time Ts3 has elapsed. In a case where the third predetermined time Ts3 has elapsed, the control device 15 determines that the determination result is "YES" in Step S132 and causes the program to proceed to Step S134.

The control device 15 corrects the fuel reference flow rate Qfk to be decreased by the fuel correction amount Qfh in Step S134 (fuel flow rate correction unit 15g). That is, in a case where non-blowing off of the first combustion unit 36 is continued for a third predetermined time Ts3 after correcting the fuel reference flow rate Qfk to be increased by the fuel correction amount Qfh in Step S126, the control device 15 corrects the fuel reference flow rate Qfk to be decreased by the fuel correction amount Qfh in Step S134 and returns the fuel reference flow rate Qfk to a state before being increased in a stepwise manner. The control device 15 causes the program to be returned to Step S104.

In a case where firing up of the first combustion unit 36 by the first ignition unit 15e and blowing off of the first combustion unit 36 are frequently repeated even in a case where the fuel reference flow rate Qfk is corrected to be increased in Step S126, the number of blow-off times within the second predetermined time Ts2 becomes greater than or equal to the predetermined number of times n again and thus, the control device 15 determines that the determination result is "YES" in Step S124 again and corrects the fuel reference flow rate Qfk to be increased in Step S126 again. That is, in a case where firing up of the first combustion unit 36 by the first ignition unit 15e and blowing off of the first combustion unit 36 are frequently repeated, the control device 15 corrects the fuel reference flow rate Qfk to be increased in a stepwise manner until the fuel target flow rate Qft becomes greater than or equal to the fuel upper limit flow rate QfU.

Next, description will be made on a case where the fuel cell system 1 operates in line with the flowchart described above. Description will be made on a case where firing up of the first combustion unit 36 by the first ignition unit 15e and blowing off of the first combustion unit 36 are frequently repeated and the fuel reference flow rate Qfk is corrected to be increased with reference to a time chart illustrated in Fig. 5.

In a case where the fuel target flow rate Qft is set to the fuel reference flow rate Qfk and the power generation operation of the fuel cell system 1 is performed, when the first combustion unit 36 is blown off (time t1), the ignition heaters 36a1 and 36a2 are turned on (Step S108). In a case where the first combustion unit 36 is not fired up even when the first predetermined time Ts1 has elapsed, the fuel target flow rate Qft is increased by the fuel increase amount Qfz (time t2; Step S114). Furthermore, in a case where the first combustion unit 36 is not fired up even when the first predetermined time Ts1 has elapsed, the fuel target flow rate Qft is further increased by the fuel increase amount Qfz (time t3; Step S114). When the first predetermined time Ts1 has elapsed and the first combustion unit 36 is fired up, the ignition heaters 36a1 and 36a2 are turned off and the fuel target flow rate Qft returns to the fuel reference flow rate Qfk (time t4; Steps S112, S120, and S122).

Thereafter, when firing up of the first combustion unit 36 by the first ignition unit 15e and blowing off of the first combustion unit 36 are repeated (first combustion unit 36 is blown off at time t5, time t6, time t7, and time t8) and the number of blow-off times within the second predetermined time Ts2 reaches the predetermined number of times n (time t9), the fuel reference flow rate Qfk is corrected to be increased by the fuel correction amount Qfh (Steps S124, and S126) and the fuel target flow rate Qft is increased.

According to the first embodiment disclosed here, the fuel cell system 1 includes the fuel cell 34 that includes a fuel electrode to which fuel (reforming raw material) reformed in a supply source is supplied from the supply source and an oxidizer electrode to which oxidizer gas (air) is supplied and generates the electric power using the reforming gas and air, the raw material pump 11a1 which supplies the reforming raw material to the fuel cell 34, the first combustion unit 36 which burns the combustible gas (anode off gas) led out from the fuel electrode of the fuel cell 34 using air, the ignition heaters 36a1 and 36a2 that ignite the anode off gas introduced into the first combustion unit 36 to fire up the first combustion unit 36, and the control device 15 that controls at least the fuel cell 34. The control device 15 includes the fuel reference flow rate setting unit 15b which sets the fuel target flow rate Qft, which is a target flow rate of reforming raw material to be supplied to the fuel cell 34, to a fuel reference flow rate Qfk, which is a flow rate to become a reference of reforming raw material, on the basis of the power generation amount of the fuel cell 34 during the power generation of the fuel cell system 1, the blow-off determination unit 15d which determines whether blowing off, by which a combustion state of the first combustion unit 36 is dissolved partially or in its entirety, has occurred or not, and the first ignition unit 15e which increases the fuel target flow rate Qft in a stepwise manner from the fuel reference flow rate Qfk, which is set by the fuel reference flow rate setting unit 15b, and performs ignition of the anode off gas by the ignition heaters 36a1 and 36a2 in a case where it is determined, by the blow-off determination unit 15d, that blowing off has occurred, during the power generation operation of the fuel cell system 1.

Accordingly, in a case where the first combustion unit 36 is blown off when the power generation amount of the fuel cell 34 is small and the flow rate of the reforming raw material supplied to the fuel cell 34 is relatively small during the power generation operation of the fuel cell system 1, it is determined, by the blow-off determination unit 15d, that blowing off of the first combustion unit 36 has occurred and the first ignition unit 15e increases the flow rate of the reforming raw material in a stepwise manner to increase the flow rate of the anode off gas. It is possible to allow the first combustion unit 36 to be in a state capable of being easily ignited. Therefore, even in a case where the first combustion unit 36 is blown off when the flow rate of the reforming raw material supplied to the fuel cell 34 is relatively small, the first combustion unit 36 can be reliably fired up again.

In a case where it is determined, by the blow-off determination unit 15d, that blowing off of the first combustion unit 36 has occurred, the first ignition unit 15e increases the flow rate of the reforming raw material in a stepwise manner to increase the flow rate of the anode off gas and thus, it is possible to allow the first combustion unit 36 to be in a state capable of being easily ignited at a relatively early stage. Since the blowing off of the first combustion unit 36 can be dissolved at a relatively early stage, temperature reduction of the fuel cell 34 due to the blowing off of the first combustion unit 36 can be suppressed. Therefore, it is possible to suppress stoppage of the power generation of the fuel cell 34 due to the temperature reduction of the fuel cell 34. The blowing off of the first combustion unit 36 can be dissolved at a relatively early stage to thereby suppress an amount of the unburned combustible gas to be processed by the combustion catalyst and thus, degradation of a combustion catalyst can be suppressed.

The control device 15 further includes an abnormality detection unit 15f detecting that abnormality is present in the fuel cell system 1 in a case where the first combustion unit 36 is not fired up even by the ignition of anode off gas by the first ignition unit 15e and the fuel target flow rate Qft reaches the fuel upper limit flow rate QfU.

Accordingly, in a case where the flow rate of the reforming raw material is increased in a stepwise manner by the first ignition unit 15e and the fuel target flow rate Qft reaches the fuel upper limit flow rate QfU, the abnormality detection unit 15f detects abnormality present in the fuel cell system 1, for example, abnormality of the raw material pump 11a1 due to change over time and abnormality of the temperature sensors 33a, 36b, and 39b. In this case, it is possible to stop, for example, operation of the fuel cell system 1.

The control device 15 further includes a fuel flow rate correction unit 15g which corrects the fuel reference flow rate Qfk to be increased in a case where firing up of the first combustion unit 36 by the first ignition unit 15e and blowing off of the first combustion unit 36 are repeated the predetermined number of times n within the second predetermined time Ts2 during the power generation operation of the fuel cell system 1.

Accordingly, it is considered that in a case where firing up of the first combustion unit 36 and blowing off of the first combustion unit 36 by the first ignition unit 15e are frequently repeated during the power generation operation of the fuel cell system 1, the actual flow rate of the reforming raw material and the flow rate of the anode off gas become relatively small due to, for example, the change over time of the raw material pump 11a1. In this case, the fuel flow rate correction unit 15g corrects the fuel reference flow rate Qfk to be increased. With this, the flow rate of the reforming raw material and the flow rate of the anode off gas are increased and thus, it is possible to stabilize the combustion state of the first combustion unit 36.

### Second Embodiment

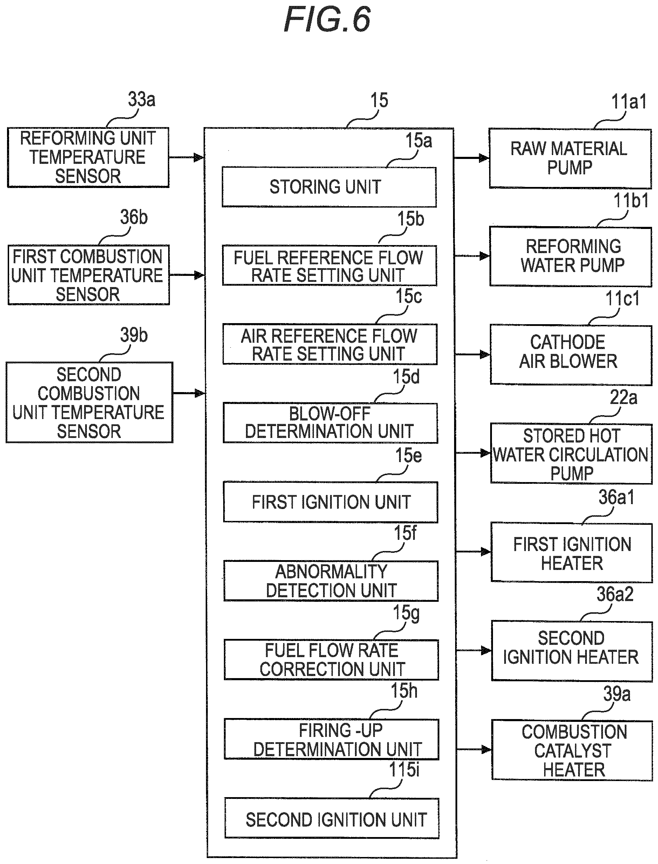

Next, regarding a second embodiment of the fuel cell system 1 disclosed here, description will be mainly on portions different from those of the first embodiment described above. The control device 15, as illustrated in Fig. 6, further includes a second ignition unit 115i in the second embodiment disclosed here. The second ignition unit 115i decreases the fuel target flow rate Qft in a stepwise manner from the fuel reference flow rate Qfk which is set by the fuel reference flow rate setting unit 15b and performs ignition of the combustible gas (anode off gas) by the ignition heaters 36a1 and 36a2 in a case where the first combustion unit 36 is not fired up even by ignition of combustible gas (anode off gas) by the first ignition unit 15e. In the second embodiment, the fuel flow rate correction unit 15g corrects the fuel reference flow rate Qfk to be decreased by the fuel correction amount Qfh in a case where firing up of the first combustion unit 36 and blowing off of the first combustion unit 36 by the second ignition unit 115i are repeated and the number of blow-off times within second predetermined time Ts2 becomes greater than or equal to the predetermined number of times n.

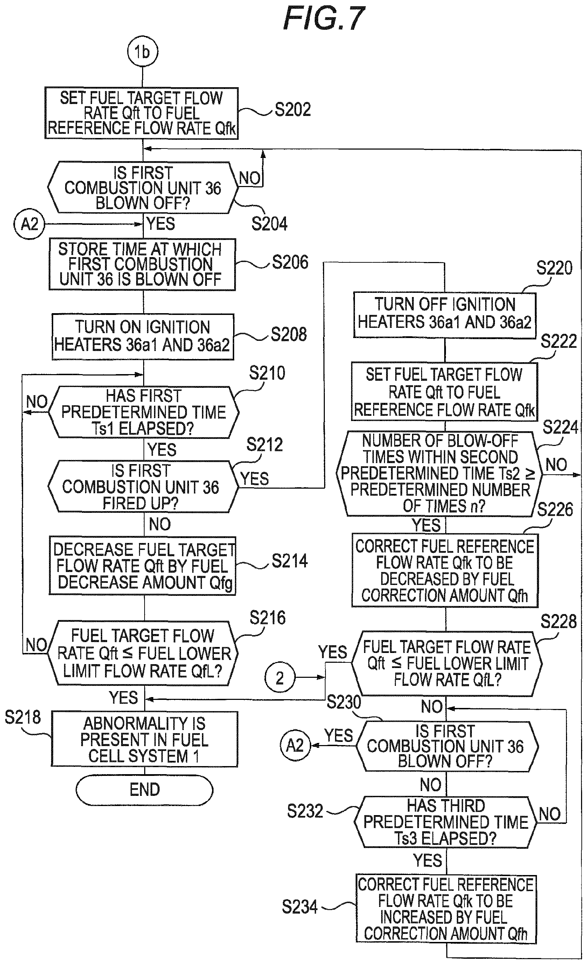

Although the re-firing up control of the control device 15 is executed in line with the flowcharts of Fig. 3 and Fig. 4 in the first embodiment described above, in contrast, the re-firing up control according to the second embodiment is executed in line with the flowcharts of Fig. 3 and Fig. 7. In the second embodiment, "1" which is an encircled coupling reference numeral illustrated in Fig. 3 is coupled only with the encircled coupling reference numeral "1b" illustrated in Fig. 7.

Although the program is caused to proceed to Step S118 (see Fig. 4) in the first embodiment described above in a case where the control device 15 determines that the determination result is "YES" in Step S116 (see Fig. 3), instead of this, the program is caused to proceed to Step S202 (see Fig. 7) in the second embodiment. In this case, blowing off of the first combustion unit 36 continues and the fuel target flow rate Qft is in a state of being greater than or equal to the fuel upper limit flow rate QfU. In this case, it is considered that, for example, due to the change over time of the raw material pump 11a1, the actual flow rate of the reforming raw material is increased with respect to the flow rate of the reforming raw material which corresponds to the control command value and the flow rate of air with respect to the flow rate of the anode off gas is insufficient and thus, the first combustion unit 36 is not fired up. The control device 15 causes the program to proceed to Step S202 illustrated in Fig. 7 and decreases the fuel target flow rate Qft in a stepwise manner and continues the re-firing up control. In the flowchart illustrated in Fig. 7, control other than the control in which the fuel target flow rate Qft is decreased in a stepwise manner in a case where the first combustion unit 36 is fired up and the control for correcting the fuel reference flow rate Qfk is similar to the flowchart illustrated in Fig. 3.

The control device 15 sets the fuel target flow rate Qft to the fuel reference flow rate Qfk in Step S202. That is, the fuel target flow rate Qft is returned to a state before being increased in a stepwise manner by the first ignition unit 15e. The control device 15 executes Step S204 to Step S212 similar to Step S104 to Step S112 in the first embodiment described above. In a case where the first combustion unit 36 is not fired up, the control device 15 determines that the determination result is "NO" in Step S212 and decreases the fuel target flow rate Qft by the fuel decrease amount Qfg in Step S214 (second ignition unit 115i). The fuel decrease amount Qfg is set on the basis of the air fuel ratio of the reforming raw material. The fuel decrease amount Qfg is set to, for example, 5% of the fuel reference flow rate Qfk.

The control device 15 determines whether the fuel target flow rate Qft is equal to or less than the fuel lower limit flow rate QfL in Step S216. The fuel lower limit flow rate QfL is set to the flow rate of the reforming raw material which corresponds to the flow rate of the lower limit of the anode off gas to be burned in the first combustion unit 36 which sets the temperature of the fuel cell 34 to a temperature at which the fuel cell 34 can be operated. In a case where the fuel target flow rate Qft is equal to or less than the fuel lower limit flow rate QfL, the control device 15 determines that the determination result is "YES" in Step S216 and detects that abnormality is present in the fuel cell system 1 in Step S218 (abnormality detection unit 15f).

On the other hand, in a case where the fuel target flow rate Qft is greater than the fuel lower limit flow rate QfL, the control device 15 determines that the determination result is "NO" in Step S216 and causes the program to be returned to Step S210. As such, in the second embodiment, in a case where the first combustion unit 36 is not fired up even by the first ignition unit 15e, the control device 15 decreases the fuel target flow rate Qft in a stepwise manner and performs ignition of the anode off gas until the fuel target flow rate Qft becomes equal to or less than the fuel lower limit flow rate QfL by the second ignition unit 115i.

In a case where the fuel target flow rate Qft is decreased and thus the first combustion unit 36 is fired up, the control device 15 determines that the determination result is "YES" in Step S212 and executes Step S220 to Step S224 similar to Step S120 to Step S124 in the first embodiment.

In the process after the execution, in a case where firing up of the first combustion unit 36 and blowing off of the first combustion unit 36 by the second ignition unit 115i are repeated and the number of blow-off times within the second predetermined time Ts2 becomes greater than or equal to the predetermined number of times n, the control device 15 determines that the determination result is "YES" in Step S224. The control device 15 corrects the fuel reference flow rate Qfk to be decreased by the fuel correction amount Qfh in Step S226 (fuel flow rate correction unit 15g). As such, in a case where firing up of the first combustion unit 36 by the second ignition unit 115i and blowing off of the first combustion unit 36 are frequently repeated, the control device 15 corrects the fuel reference flow rate Qfk to be decreased.

The control device 15 determines whether the fuel target flow rate Qft is equal to or less than the fuel lower limit flow rate QfL in Step S228. In a case where the fuel target flow rate Qft is equal to or less than the fuel lower limit flow rate QfL, the control device 15 determines that the determination result is "YES" in Step S228 and detects that abnormality is present in the fuel cell system 1 in Step S218 (abnormality detection unit 15f).

On the other hand, in a case where the fuel target flow rate Qft is greater than the fuel lower limit flow rate QfL, the control device 15 determines that the determination result is "NO" in Step S228 and determines whether the first combustion unit 36 is blown off or not in Step S230 (blow-off determination unit 15d). In a case where the first combustion unit 36 is blown off, the control device 15 determines that the determination result is "YES" in Step S230, causes the program to be returned to Step S206, and as described above, decreases the fuel target flow rate Qft in a stepwise manner and performs ignition of the anode off gas (Steps S206 to S216).

On the other hand, in a case where the first combustion unit 36 is not blown off, the control device 15 determines that the determination result is "NO" in Step S230 and repeatedly executes Step S230 and Step 232 until the third predetermined time Ts3 has elapsed, similar to Step S130 and Step S132 of the first embodiment described above. In a case where the third predetermined time Ts3 has elapsed, the control device 15 determines that the determination result is "YES" in Step S232 and causes the program to proceed to Step S234.

The control device 15 corrects the fuel reference flow rate Qfk to be increased by the fuel correction amount Qfh in Step S234 (fuel flow rate correction unit 15g). That is, in a case where non-blowing off of the first combustion unit 36 is continued for the third predetermined time Ts3 after correcting the fuel reference flow rate Qfk to be decreased by the fuel correction amount Qfh in Step S226, the control device 15 corrects the fuel reference flow rate Qfk to be increased by the fuel correction amount Qfh in Step S234, and causes the fuel reference flow rate Qfk to be returned to a state before being decreased. The control device 15 causes the program to be returned to Step S204. As such, in a case where firing up of the first combustion unit 36 by the second ignition unit 115i and blowing off of the first combustion unit 36 are frequently repeated, the control device 15 corrects the fuel reference flow rate Qfk to be decreased in a stepwise manner until the fuel target flow rate Qft becomes equal to or less than the fuel lower limit flow rate QfL.

According to the second embodiment, the control device 15 further includes a second ignition unit 115i that decreases the fuel target flow rate Qft in a stepwise manner from the fuel reference flow rate Qfk which is set by the fuel reference flow rate setting unit 15b and performs ignition of the anode off gas by the ignition heaters 36a1 and 36a2 in a case where the first combustion unit 36 is not fired up even by ignition of the anode off gas by the first ignition unit 15e.

It is considered that the flow rate of air with respect to the flow rate of the anode off gas is insufficient as described above in a case where the first combustion unit 36 is not fired up even by ignition of the anode off gas by the first ignition unit 15e when the first combustion unit 36 is blown off during the power generation operation of the fuel cell system 1. In this case, the second ignition unit 115i decreases the flow rate of the reforming raw material in a stepwise manner to decrease the flow rate of the anode off gas. With this, the flow rate of the air fuel ratio with respect to the flow rate of the anode off gas is increased and it is possible to allow the first combustion unit 36 to be in a state capable of being easily ignited. Since the flow rate of the anode off gas is relatively large, it is possible to reliably re-fire up the first combustion unit 36 even in a case where the first combustion unit 36 is blown off due to insufficiency of the flow rate of air with respect to the flow rate of the anode off gas.

In a case where firing up of the first combustion unit 36 by the second ignition unit 115i and blowing off of the first combustion unit 36 are repeated and the number of blow-off times within the second predetermined time Ts2 becomes greater than or equal to the predetermined number of times n, the fuel flow rate correction unit 15g corrects the fuel reference flow rate Qfk to be decreased by the fuel correction amount Qfh. As such, in a case where firing up of the first combustion unit 36 and blowing off of the first combustion unit 36 are repeated the predetermined number of times n within the second predetermined time Ts2 during the power generation operation of the fuel cell system 1, the fuel flow rate correction unit 15g corrects the fuel reference flow rate Qfk.

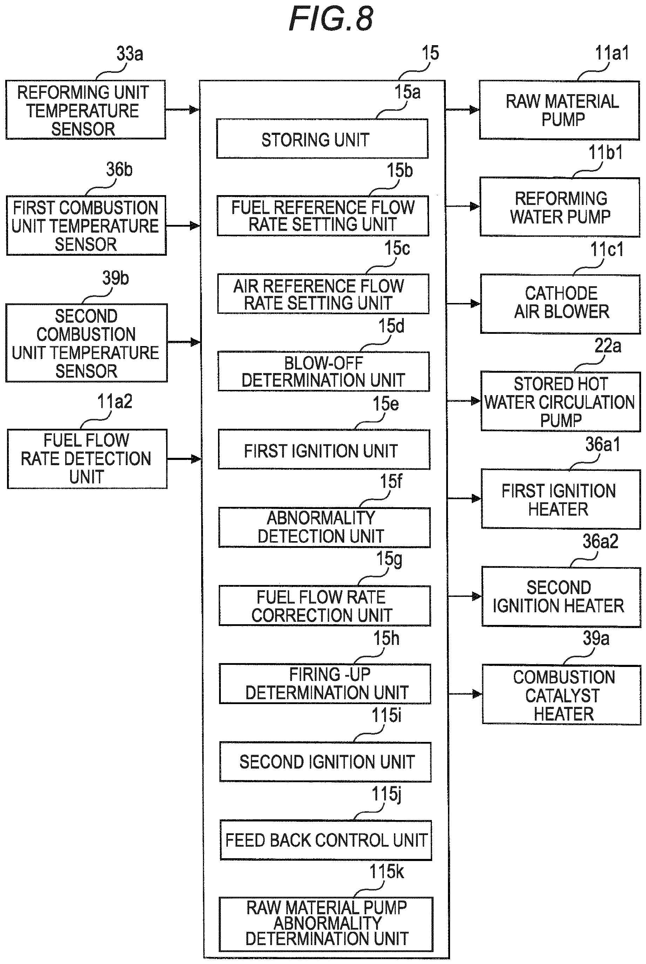

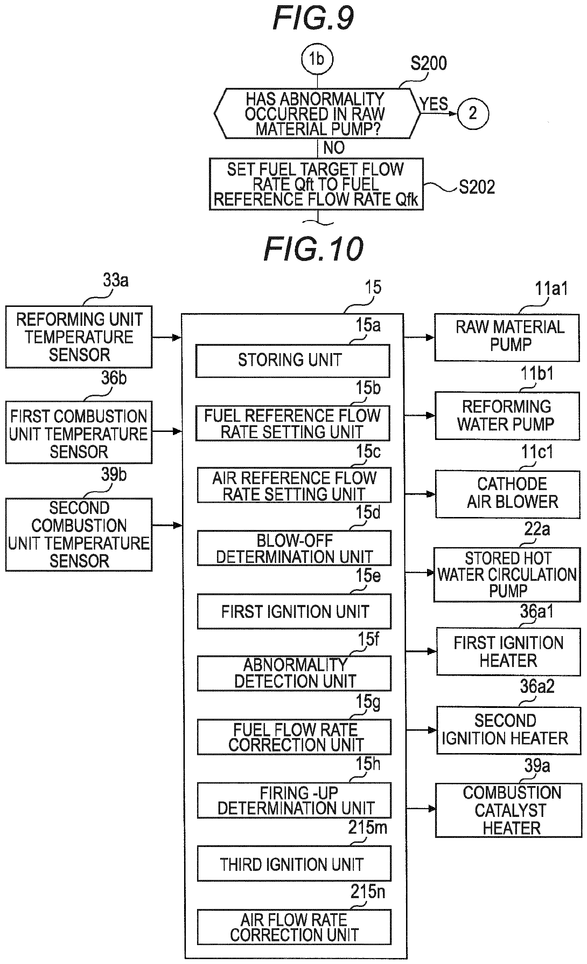

Next, description will be made on a modification example of the second embodiment described above. In the modification example, the fuel cell system 1 as illustrated in Fig. 8 further includes a fuel flow rate detection unit 11a2. The control device 15 further includes a feedback control unit 115j, a third map, and a raw material pump abnormality determination unit 115k, and further executes Step S200 (see Fig. 9) immediately before Step S202 in the flowchart illustrated in Fig. 7 in the second embodiment.

The fuel flow rate detection unit 11a2 is a flow rate sensor which is arranged in the reforming raw material supply pipe 11a and detects the flow rate of the reforming raw material supplied to the fuel cell module 30. The detection result of the fuel flow rate detection unit 11a2 is transmitted to the control device 15.

The feedback control unit 115j controls the raw material pump 11a1 such that the flow rate of the reforming raw material detected by the fuel flow rate detection unit 11a2 becomes the fuel target flow rate Qft. The feedback control unit 115j calculates an amount of feedback for the raw material pump 11a1 (operation amount (number of rotations) of the raw material pump 11a1) as the control command value on the basis of the deviation between the flow rate of the reforming raw material detected by the fuel flow rate detection unit 11a2 and the fuel target flow rate Qft and outputs the control command value to the raw material pump 11a1.

The third map is stored in the storing unit 15a and represents a third correlation between the fuel target flow rate Qft and a range of the control command value for the raw material pump 11a1. The range of the control command value is a range of a normal duty ratio which is a duty ratio for the raw material pump 11a1 according to the fuel target flow rate Qft in a case where the raw material pump 11a1 is in a normal state. The third correlation is derived by being measured by experiments or the like in advance.

The raw material pump abnormality determination unit 115k determines whether abnormality is present in the raw material pump 11a1. Specifically, the raw material pump abnormality determination unit 115k determines whether an output duty ratio, which is the duty ratio output to the raw material pump 11a1 by the feedback control unit 115j according to the fuel target flow rate Qft, is within the normal duty ratio represented in the third map (which will be described later).

In a case where the control device 15 determines that the determination result is "YES" in Step S116 illustrated in the flowchart of Fig. 3 (in a case where the fuel target flow rate Qft becomes greater than or equal to the fuel upper limit flow rate QfU), the control device 15 determines whether abnormality is present in the raw material pump 11a1 in Step S200 (raw material pump abnormality determination unit 115k). In a case where the output duty ratio is not within the range of the normal duty ratio, the control device 15 determines that abnormality is present in the raw material pump 11a1. In this case, the control device 15 determines that the determination result is "YES" in Step S200 and causes the program to proceed to Step S218 (see Fig. 7). On the other hand, in a case where the output duty ratio is within the range of the normal duty ratio, the control device 15 determines that abnormality is not present in the raw material pump 11a1. In this case, the control device 15 determines that the determination result is "NO" in Step S200 and causes the program to proceed to Step S202. The control device 15, as described above, decreases the fuel target flow rate Qft in a stepwise manner and performs ignition of the anode off gas (Steps S208 to Step S216; second ignition unit 115i).

According to the modification example, the control device 15 determines whether abnormality is present in the raw material pump 11a1 prior to decreasing the fuel target flow rate Qft in a stepwise manner and performing the ignition of the anode off gas (raw material pump abnormality determination unit 115k). In a case where a cause of generation of the blowing off of the first combustion unit 36 is the abnormality of the raw material pump 11a1, the control device 15 is able to detect the abnormality of the raw material pump 11a1 early, prior to decreasing the fuel target flow rate Qft in a stepwise manner.

### Third Embodiment

Next, regarding a third embodiment of the fuel cell system 1 disclosed here, description will be mainly on portions different from those of the first embodiment described above. As illustrated in Fig. 10, the control device 15 further includes a third ignition unit 215m and an air flow rate correction unit 215n in the third embodiment.

In a case where the first combustion unit 36 is not fired up even by ignition of combustible gas (anode off gas) by the first ignition unit 15e, the third ignition unit 215m increases the air target flow rate Qat in a stepwise manner from the air reference flow rate Qak which is set by the air reference flow rate setting unit 15c and performs ignition of the combustible gas (anode off gas) by the ignition heaters 36a1 and 36a2.

In a case where firing up of the first combustion unit 36 by the third ignition unit 215m and blowing off of the first combustion unit 36 are repeated the predetermined number of times n within the second predetermined time Ts2 during the power generation operation of the fuel cell system 1, the air flow rate correction unit 215n corrects the air reference flow rate Qak which is set by the air reference flow rate setting unit 15c.

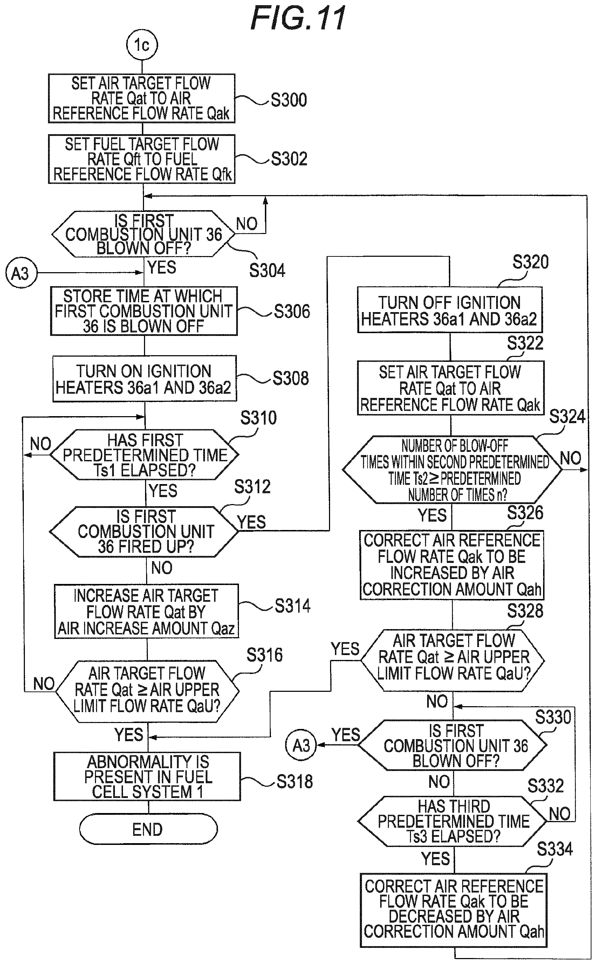

Although the re-firing up control of the control device 15 is executed in line with the flowcharts of Fig. 3 and Fig. 4 in the first embodiment described above, in contrast, the re-firing up control according to the third embodiment is executed in line with the flowcharts of Fig. 3 and Fig. 11. In the third embodiment, "1" which is an encircled coupling reference numeral illustrated in Fig. 3 is coupled only with the encircled coupling reference numeral "1c" illustrated in Fig. 11.

Although the program is caused to proceed to Step S118 (see Fig. 4) in the first embodiment described above in a case where the control device 15 determines that the determination result is "YES" in Step S116 (see Fig. 3), instead of this, the program is caused to proceed to Step S300 (see Fig. 11) in the third embodiment. In this case, blowing off of the first combustion unit 36 continues and the fuel target flow rate Qft is in a state of being greater than or equal to the fuel upper limit flow rate QfU. In this case, it is considered that, for example, the actual flow rate of the reforming raw material is increased with respect to the flow rate of the reforming raw material which corresponds to the control command value due to the change over time of the raw material pump 11a1 or the actual flow rate of air with respect to the flow rate of the reforming raw material which corresponds to the control command value being insufficient due to the change over time of the cathode air blower 11c1 and thus, the first combustion unit 36 is not fired up. The control device 15 increases the air target flow rate Qat in a stepwise manner and continues the re-firing up control. In the flowchart illustrated in Fig. 11, a control other than the control in which the air target flow rate Qat is increased in a stepwise manner in a case where the first combustion unit 36 is fired up and the control for correcting the air reference flow rate Qak is similar to the flowchart illustrated in Fig. 3.

The control device 15 continues to perform a power generation operation by setting the air target flow rate Qat to the air reference flow rate Qak in Step S300. The control device 15 sets the fuel target flow rate Qft to the fuel reference flow rate Qfk in Step S302. That is, the fuel target flow rate Qft is returned to a state before being increased in a stepwise manner by the first ignition unit 15e. The control device 15 executes Step S304 to Step S312 similar to Step S104 to Step S112 in the first embodiment. In a case where the first combustion unit 36 is not fired up, the control device 15 determines that the determination result is "NO" in Step S312 and increases the air target flow rate Qat by the air increase amount Qaz in Step S314 (third ignition unit 215m). The air increase amount Qaz is set on the basis of the air fuel ratio of the reforming raw material. The air increase amount Qaz is, for example, 5% of the air reference flow rate Qak.

The control device 15 determines whether the air target flow rate Qat is greater than or equal to the air upper limit flow rate QaU in Step S316. The air upper limit flow rate QaU is set to a flow rate which is greater than the flow rate of air which corresponds to the maximum output of the fuel cell 34. In a case where the air target flow rate Qat is greater than or equal to the air upper limit flow rate QaU, the control device 15 determines that the determination result is "YES" in Step S316 and detects that abnormality is present in the fuel cell system 1 in Step S318 (abnormality detection unit 15f).

On the other hand, in a case where the air target flow rate Qat is less than the air upper limit flow rate QaU, the control device 15 determines that the determination result is "NO" in Step S316 and causes the program to be returned to Step S310. As such, in the third embodiment, in a case where the first combustion unit 36 is not fired up even by the first ignition unit 15e, the control device 15 increases the air target flow rate Qat in a stepwise manner and performs ignition of the anode off gas until the air target flow rate Qat becomes greater than or equal to the air upper limit flow rate QaU by the third ignition unit 215m.

In a case where the air target flow rate Qat is increased and thus the first combustion unit 36 is fired up, the control device 15 determines that the determination result is "YES" in Step S312 and executes Step S320 to Step S324 similar to Step S120 to Step S124 in the first embodiment.

In the process after the execution, in a case where firing up of the first combustion unit 36 by the third ignition unit 215m and blowing off of the first combustion unit 36 are repeated and the number of blow-off times within the second predetermined time Ts2 becomes greater than or equal to the predetermined number of times n, the control device 15 determines that the determination result is "YES" in Step S324. The control device 15 corrects the air reference flow rate Qak to be increased by the air correction amount Qah in Step S326 (air flow rate correction unit 215n). The air correction amount Qah is set to, for example, 1% of the air reference flow rate Qak. As such, in a case where firing up of the first combustion unit 36 and blowing off of the first combustion unit 36 by the third ignition unit 215m are frequently repeated, the control device 15 corrects the air reference flow rate Qak to be increased.

The control device 15 determines whether the air target flow rate Qat is greater than or equal to the air upper limit flow rate QaU in Step S328. In a case where the air target flow rate Qat is greater than or equal to the air upper limit flow rate QaU, the control device 15 determines that the determination result is "YES" in Step S328 and detects that abnormality is present in the fuel cell system 1 in Step S318 (abnormality detection unit 15f).

On the other hand, in a case where the air target flow rate Qat is less than the air upper limit flow rate QaU, the control device 15 determines that the determination result is "NO" in Step S328 and determines whether the first combustion unit 36 is blown off or not in Step S330 (blow-off determination unit 15d). In a case where the first combustion unit 36 is blown off, the control device 15 determines that the determination result is "YES" in Step S330, causes the program to be returned to Step S306, and, as described above, increases the air target flow rate Qat in a stepwise manner and performs ignition of the anode off gas (Steps S306 to S316).

On the other hand, in a case where the first combustion unit 36 is not blown off, the control device 15 determines that the determination result is "NO" in Step S330 and repeatedly executes Step S330 and Step 332 until the third predetermined time Ts3 has elapsed, similar to Step S130 and Step 132 of the first embodiment described above. In a case where the third predetermined time Ts3 has elapsed, the control device 15 determines that the determination result is "YES" in Step S332 and causes the program to proceed to Step S334.

The control device 15 corrects the air reference flow rate Qak to be decreased by the air correction amount Qah in Step S334 (air flow rate correction unit 215n). That is, in a case where non-blowing off of the first combustion unit 36 is continued for the third predetermined time Ts3 after correcting the air reference flow rate Qak to be increased by the air correction amount Qah in Step S326, the control device 15 corrects the air reference flow rate Qak to be decreased by the air correction amount Qah in Step S334, and causes the air reference flow rate Qak to be returned to a state before being increased. The control device 15 causes the program to be returned to Step S304. As such, in a case where firing up of the first combustion unit 36 by the third ignition unit 215m and blowing off of the first combustion unit 36 are frequently repeated, the control device 15 corrects the air reference flow rate Qak to be increased in a stepwise manner until the air target flow rate Qat becomes greater than or equal to the air upper limit flow rate QaU.

According to the third embodiment, the fuel cell system 1 further includes a cathode air blower 11c1 which supplies oxidizer gas (air) to the fuel cell 34, and the control device 15 further includes the air reference flow rate setting unit 15c which sets the air target flow rate Qat, which is a target flow rate of air supplied to the fuel cell 34, to the air reference flow rate Qak, which is a flow rate which becomes a reference of air, on the basis of the power generation amount of the fuel cell 34 during the power generation operation of the fuel cell system 1, and the third ignition unit 215m which increases the air target flow rate Qat in a stepwise manner from the air reference flow rate Qak which is set by the air reference flow rate setting unit 15c and performs ignition of the anode off gas by the ignition heaters 36a1 and 36a2 in a case where the first combustion unit 36 is not fired up even by ignition of the anode off gas by the first ignition unit 15e.

Accordingly, it is considered that the flow rate of air becomes relatively less and thus the flow rate of air with respect to the flow rate of the anode off gas is insufficient in a case where the first combustion unit 36 is not fired up even by the ignition by the first ignition unit 15e when the first combustion unit 36 is blown off, during the power generation operation of the fuel cell system 1. In this case, the third ignition unit 215m increases the flow rate of air in a stepwise manner. With this, the flow rate of air with respect to the flow rate of the anode off gas is increased and thus, it is possible to allow the first combustion unit 36 to be in a state capable of being easily ignited. The flow rate of air is relatively less and thus, it is possible to reliably re-fire up the first combustion unit 36 even in a case where the first combustion unit 36 is blown off due to insufficiency of the flow rate of air with respect to the flow rate of the anode off gas.

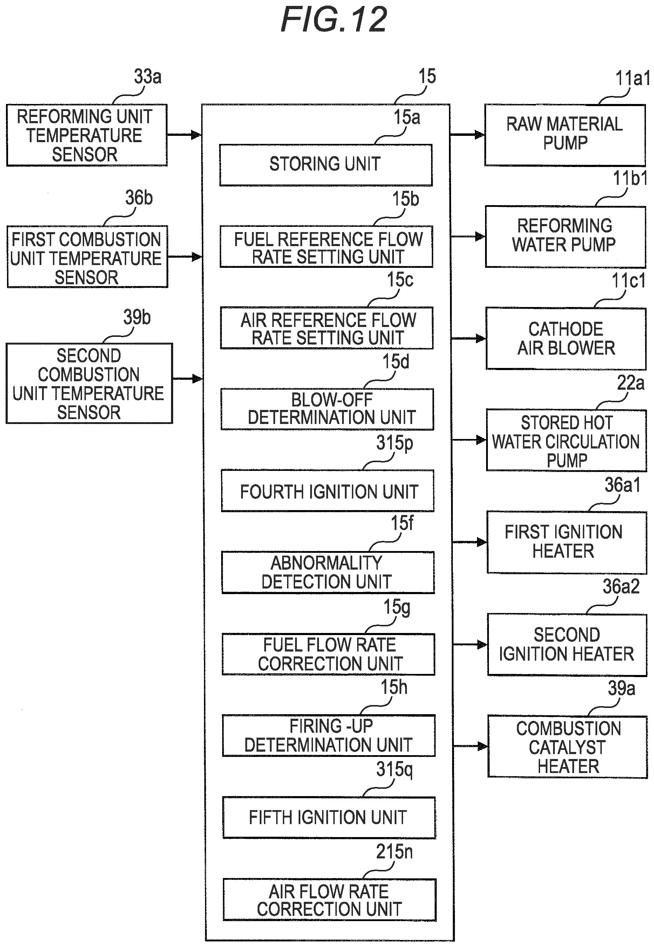

Next, description will be made on a first modification example of the third embodiment. In the modification example, a fourth ignition unit 315p and a fifth ignition unit 315q are provided as illustrated in Fig. 12, instead of the first ignition unit 15e and the third ignition unit 215m (see Fig. 10) of the third embodiment.

In a case where it is determined, by the blow-off determination unit 15d, that blowing off of the first combustion unit 36 has occurred during the power generation operation of the fuel cell system 1, the fourth ignition unit 315p decreases the air target flow rate Qat in a stepwise manner from the air reference flow rate Qak which is set by the air reference flow rate setting unit 15c and performs ignition of the combustible gas (anode off gas) by the ignition heaters 36a1 and 36a2.

In a case where the first combustion unit 36 is not fired up by ignition of the combustible gas (anode off gas) by the fourth ignition unit 315p, the fifth ignition unit 315q increases the fuel target flow rate Qft in a stepwise manner from the fuel reference flow rate Qfk which is set by the fuel reference flow rate setting unit 15b and performs ignition of the combustible gas (anode off gas) by the ignition heaters 36a1 and 36a2.

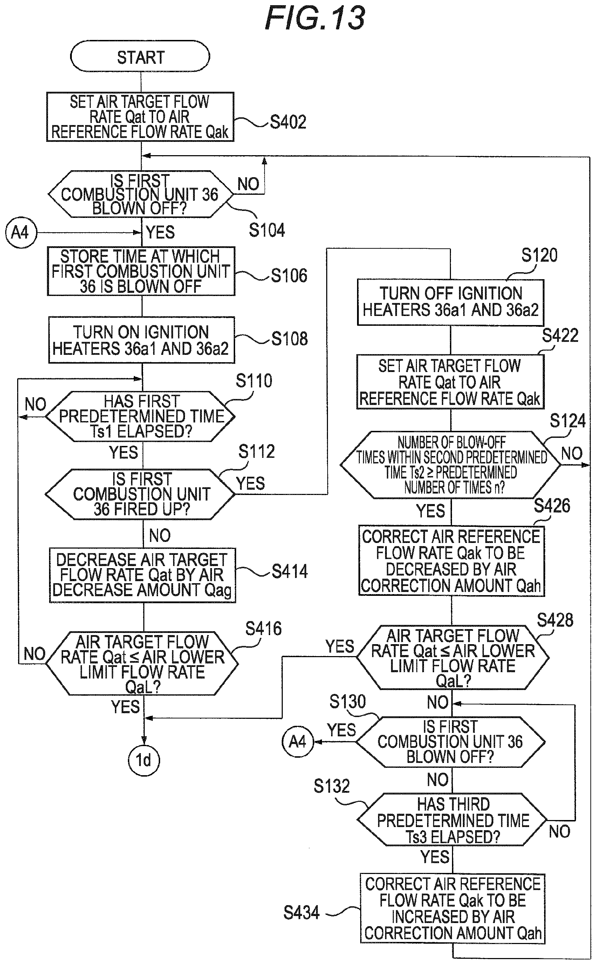

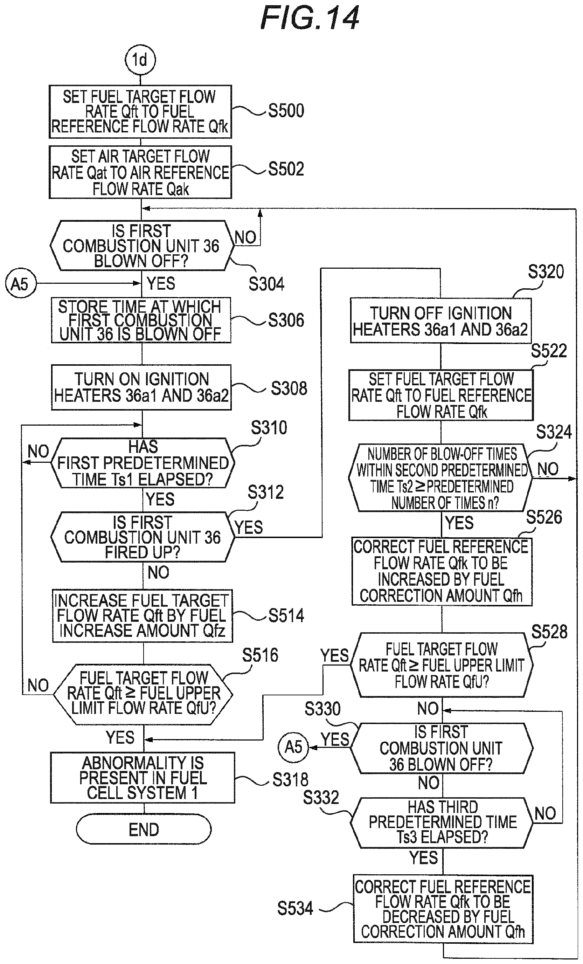

Although the re-firing up control of the control device 15 is executed in line with the flowcharts of Fig. 3 and Fig. 11 in the third embodiment described above, in contrast, the re-firing up control of the first modification example is executed in line with the flowcharts of Fig. 13 and Fig. 14.

The control device 15 continues to perform a power generation operation by setting the air target flow rate Qat to the air reference flow rate Qak in Step S402 as illustrated in the flowchart of Fig. 13.

Description will be made on portions different from Step S104 to Step S134 of the third embodiment described above in the present first modification example.

The control device 15 decreases the air target flow rate Qat by the air decrease amount Qag in Step S414, instead of Step S114 of the third embodiment described above (fourth ignition unit 315p). The air decrease amount Qag is set on the basis of the air fuel ratio of the reforming raw material. The air decrease amount Qag is set to, for example, 5% of the air reference flow rate Qak.

Furthermore, the control device 15 determines whether the air target flow rate Qat is equal to or less than the air lower limit flow rate QaL in Step S416, instead of Step S116 of the third embodiment described above. The air lower limit flow rate QaL is set to the flow rate of air by which the anode off gas, of which the flow rate corresponds to the fuel lower limit flow rate QfL of the reforming raw material, is completely burned. As such, in a case where the first combustion unit 36 is not fired up, the control device 15 decreases the air target flow rate Qat in a stepwise manner until the air target flow rate Qat becomes equal to or less than the air lower limit flow rate QaL and performs ignition of the anode off gas.

The control device 15 sets the air target flow rate Qat to the air reference flow rate Qak in Step S422, instead of Step S122 of the third embodiment described above. That is, the control device 15 returns the air target flow rate Qat to a state before being decreased in a stepwise manner.

The control device 15 corrects the air reference flow rate Qak to be decreased by the air correction amount Qah in Step S426, instead of Step S126 of the third embodiment described above (air flow rate correction unit 215n). As such, in a case where firing up of the first combustion unit 36 by the fourth ignition unit 315p and blowing off of the first combustion unit 36 are repeated, the control device 15 corrects the air reference flow rate Qak to be decreased.

The control device 15 determines whether the air target flow rate Qat is equal to or less than the air lower limit flow rate QaL in Step S428, instead of Step S128 of the third embodiment described above.

Furthermore, the control device 15 corrects the air reference flow rate Qak to be increased by the air correction amount Qah in Step S434, instead of Step S134 of the third embodiment described above (air flow rate correction unit 215n). That is, in a case where non-blowing off of the first combustion unit 36 is continued for the third predetermined time Ts3 after correcting the air reference flow rate Qak to be decreased by the air correction amount Qah in Step S426, the control device 15 corrects the air reference flow rate Qak to be increased by the air correction amount Qah and returns the air reference flow rate Qak to a state before being decreased in a stepwise manner in Step S434. As such, in a case where firing up of the first combustion unit 36 by the fourth ignition unit 315p and blowing off of the first combustion unit 36 are repeated, the control device 15 corrects the air reference flow rate Qak to be decreased in a stepwise manner until the air target flow rate Qat becomes equal to or less than the air lower limit flow rate QaL.

As described above, in a case where the air target flow rate Qat is decreased in a stepwise manner and becomes equal to or less than the air lower limit flow rate QaL, that is, in a case where the control device 15 determines that the determination result is "YES" in Step S416 or Step S428, the control device 15 causes the program to proceed to Step S500.

The control device 15 continues to perform the power generation operation by setting the fuel target flow rate Qft to the fuel reference flow rate Qfk in Step S500 as illustrated in the flowchart of Fig. 14. The control device 15 sets the air target flow rate Qat to the air reference flow rate Qak. That is, in a case where the air target flow rate Qat is decreased in a stepwise manner by the fourth ignition unit 315p, the air target flow rate Qat is returned to a state before being decreased in a stepwise manner.

Description will be made on portions different from Step S304 to Step S334 of the third embodiment described above in the present first modification example.

The control device 15 increases the fuel target flow rate Qft by the fuel increase amount Qfz in Step S514, instead of Step S314 of the third embodiment described above (fifth ignition unit 315q). The control device 15 determines whether the fuel target flow rate Qft is greater than or equal to the fuel upper limit flow rate QfU in Step S516, instead of Step S316 of the third embodiment described above. As such, in the present first modification example, in a case where the first combustion unit 36 is not fired up even by the fourth ignition unit 315p, the control device 15 increases the fuel target flow rate Qft in a stepwise manner until the fuel target flow rate Qft becomes greater than or equal to the fuel upper limit flow rate QfU and performs ignition of anode off gas by the fifth ignition unit 315q.

The control device 15 sets the fuel target flow rate Qft to the fuel reference flow rate Qfk in Step S522, instead of Step S322 of the third embodiment described above. That is, the control device 15 returns the fuel target flow rate Qft to a state before being increased in a stepwise manner.

The control device 15 corrects the fuel reference flow rate Qfk to be increased by the fuel correction amount Qfh in Step S526, instead of Step S326 of the third embodiment described above (fuel flow rate correction unit 15g). As such, in a case where firing up of the first combustion unit 36 by the fifth ignition unit 315q and blowing off of the first combustion unit 36 are frequently repeated, the control device 15 corrects the fuel reference flow rate Qfk to be increased.

The control device 15 determines whether the fuel target flow rate Qft is equal to or greater than the fuel upper limit flow rate QfU in Step S528, instead of Step S328 of the third embodiment described above.

Furthermore, the control device 15 corrects the fuel reference flow rate Qfk to be decreased by the fuel correction amount Qfh in Step S534, instead of Step S334 of the third embodiment described above (fuel flow rate correction unit 15g). That is, in a case where non-blowing off of the first combustion unit 36 is continued for the third predetermined time Ts3 after correcting the fuel reference flow rate Qfk to be increased by the fuel correction amount Qfh in Step S526, the control device 15 corrects the fuel reference flow rate Qfk to be decreased by the fuel correction amount Qfh and returns the fuel reference flow rate Qfk to a state before being increased in a stepwise manner in Step S534. As such, in a case where firing up of the first combustion unit 36 by the fifth ignition unit 315q and blowing off of the first combustion unit 36 are frequently repeated, the control device 15 corrects the fuel reference flow rate Qfk to be increased in a stepwise manner until the fuel target flow rate Qft becomes greater than or equal to the fuel upper limit flow rate QfU.

In the embodiments described above, although one example of the fuel cell system 1 is described, the embodiments disclosed here are not limited thereto and other configurations may also be adopted. For example, although the blow-off determination unit 15d detects the occurrence of blowing off of the first combustion unit 36 on the basis of the detection temperatures of the sensors 33a, 36b, and 39b, instead of this, it may be determined, by using only the detection temperature of the second combustion unit temperature sensor 39b, whether the blowing off of the first combustion unit 36 has occurred.

The fuel cell system 1 may further incorporate an evaporating unit temperature sensor (not illustrated) in the evaporating unit 32. The evaporating unit temperature sensor detects the internal temperature of the evaporating unit 32. Specifically, the evaporating unit temperature sensor detects a temperature of a location where the evaporating unit temperature sensor is arranged in the inside of the evaporating unit 32. The evaporating unit temperature sensor is arranged at the led out port side, from which mixed gas is led out, in the inside of the evaporating unit 32. The evaporating unit temperature sensor transmits the detection result to the control device 15. In this case, the blow-off determination unit 15d may determine whether blowing off of the first combustion unit 36 has occurred on the basis of the detection temperature of the evaporating unit temperature sensor. Specifically, in a case where the detection temperature of the evaporating unit temperature sensor becomes equal to or less than a seventh determination temperature, the blow-off determination unit 15d determines that blowing off of the first combustion unit 36 has occurred. The seventh determination temperature is derived by being measured by experiments or the like in advance.

In a second modification example of the third embodiment described above, similar to the modification example of the second embodiment described above, it may be determined whether abnormality is present in the raw material pump 11a1 until the program is caused to proceed to Step S300 after the control device 15 determines that the determination result is "YES" in Step S116 illustrated in the flowchart of Fig. 3 (raw material pump abnormality determination unit 115k). In this case, similar to the modification example of the second embodiment described above, the fuel flow rate detection unit 11a2, the feedback control unit 115j, the third map, and the raw material pump abnormality determination unit 115k may also be included in the second modification example of the third embodiment.

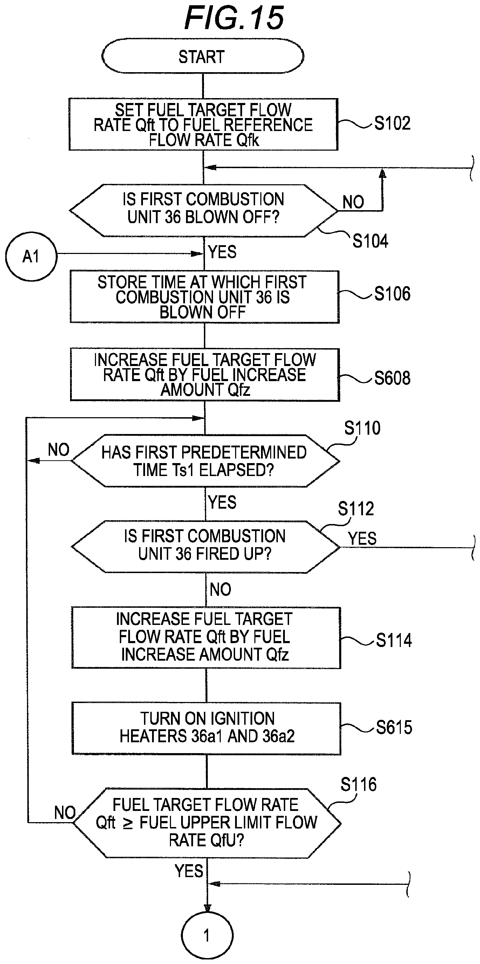

In respective embodiments and respective modification examples, although the control device 15 turns the ignition heaters 36a1 and 36a2 on (respective ignition units 15e, 115i, 215m, 315p, and 315q) immediately after the time at which the first combustion unit 36 is blown off is stored, the timing at which the ignition heaters 36a1 and 36a2 are turned on may be changed. For example, although the control device 15 turns on the ignition heaters 36a1 and 36a2 immediately after Step S106 (Step S108; see Fig. 3) in the first embodiment, instead of turning on the heaters immediately after Step S106, the control device 15 may turn on the ignition heaters 36a1 and 36a2 immediately after Step S114 as illustrated in Fig. 15 (Step S615). In this case, the control device 15 may increase the fuel target flow rate Qft by the fuel increase amount Qfz immediately after Step S106 (Step S608). Accordingly, in a case where the first combustion unit 36 which is blown off is ignited without turning on the ignition heaters 36a1 and 36a2, the number of turning-on times of the ignition heaters 36a1 and 36a2 can be suppressed and thus it is possible to extend the lifetime of the ignition heaters 36a1 and 36a2.

Furthermore, the arrangement positions of the evaporating unit 32 and the reforming unit 33, the arrangement position or number of respective temperature sensors 33a, 36b, and 39b, the method of determining the firing up of the first combustion unit 36 by the firing up determination unit 15h, the turn-on timing of the ignition heaters 36a1 and 36a2, or the like may be changed in a range without departing from a gist of the embodiment disclosed here.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

## Claims

1. A fuel cell system (1) comprising:
a fuel cell (34) that includes a fuel electrode to which fuel is supplied and an oxidizer electrode to which oxidizer gas is supplied and that generates electric power using the fuel and the oxidizer gas;
a reforming unit (33) configured to generate the fuel from reforming raw material, which is supplied from a supply source (Gs), and water vapor;
an evaporating unit (32) configured to generate the water vapor from reforming water;
a fuel supply device (llal) configured to supply the fuel to the fuel cell (34);
a combustion unit (36) configured to burn combustible gas led out from the fuel electrode of the fuel cell (34) using the oxidizer gas;
an ignition device (36al, 36a2) configured to ignite the combustible gas introduced into the combustion unit (36) to fire up the combustion unit (36); and
a control device (15) configured to control at least the fuel cell (34),
wherein the control device (15) includes:
a fuel reference flow rate setting unit (15b) configured to set a target flow rate (Qft) of fuel supplied to the fuel cell (34) to a fuel reference flow rate (Qfk) which is a reference flow rate of fuel on the basis of a power generation amount of the fuel cell (34) during a power generation operation of the fuel cell system (1),
a blow-off determination unit (15d) configured to determine whether blowing off, by which a combustion state of the combustion unit (36) is dissolved partially or in its entirety, has occurred or not, and
a first ignition unit (15e) configured to increase the target flow rate (Qft) of the fuel in a stepwise manner by a fuel increase amount (Qfz), which is set on the basis of an air fuel ratio of the reforming raw material, from the fuel reference flow rate (Qfk), which is set by the fuel reference flow rate setting unit (15b), and perform ignition of the combustible gas by the ignition device (36a1, 36a2) in a case where it is determined, by the blow-off determination unit (15d), that the blowing off has occurred, during the power generation operation of the fuel cell system (1).

2. The fuel cell system (1) according to claim 1,
wherein the control device (15) further includes an abnormality detection unit (15f) configured to detect that abnormality is present in the fuel cell system (1) in a case where the target flow rate (Qft) of the fuel reaches a predetermined flow rate with the combustion unit (36) not being fired up even by ignition of the combustible gas by the first ignition unit (15e).

3. The fuel cell system (1) according to claim 1 or 2,
wherein the control device (15) further includes a fuel flow rate correction unit (15g) configured to correct the fuel reference flow rate (Qfk), in a case where firing up of the combustion unit (36) and the blowing off of the combustion unit (36) are repeated a predetermined number of times within a predetermined period of time during the power generation operation of the fuel cell system (1).

4. The fuel cell system (1) according to any one of claims 1 to 3,
wherein the control device (15) further includes a second ignition unit (115i) configured to decrease the target flow rate (Qft) of the fuel in a stepwise manner by a fuel decrease amount (Qfg), which is set on the basis of the air fuel ratio of the reforming raw material, from the fuel reference flow rate (Qfk), which is set by the fuel reference flow rate setting unit (15b), and perform ignition of the combustible gas by the ignition device (36a1, 36a2) in a case where the combustion unit (36) is not fired up even by ignition of the combustible gas by the first ignition unit (15e).

5. The fuel cell system (1) according to any one of claims 1 to 3,
further comprising an oxidizer gas supply device (11c1) configured to supply the oxidizer gas to the fuel cell (34),
wherein the control device (15) further includes:
an oxidizer gas flow rate setting unit (15c) configured to set a target flow rate (Qat) of the oxidizer gas, which is supplied to the fuel cell (34), to an oxidizer gas reference flow rate (Qak), which is a reference flow rate of the oxidizer gas, on the basis of the power generation amount of the fuel cell (34) during the power generation operation of the fuel cell system (1), and
a third ignition unit (215m) configured to increase the target flow rate (Qat) of the oxidizer gas in a stepwise manner by an air increase amount (Qaz), which is set on the basis of the air fuel ratio of the reforming raw material, from the oxidizer gas reference flow rate (Qak), which is set by the oxidizer gas flow rate setting unit (15c), and perform ignition of the combustible gas by the ignition device (36a1, 36a2) in a case where the combustion unit (36) is not fired up even by ignition of the combustible gas by the first ignition unit (15e).

## Patentansprüche

1. Brennstoffzellensystem (1) mit:
einer Brennstoffzelle (34), die eine Brennstoffelektrode, der Brennstoff zugeführt wird, und eine Oxidationsmittelelektrode, der Oxidationsmittelgas zugeführt wird, aufweist und die unter Verwendung des Brennstoffs und des Oxidationsmittelgases elektrischen Strom erzeugt;
einer Reformiereinheit (33), die so konfiguriert ist, dass sie den Brennstoff aus Reformierausgangsmaterial, das von einer Zufuhrquelle (Gs) zugeführt wird, und Wasserdampf erzeugt;
einer Verdampfungseinheit (32), die so konfiguriert ist, dass sie aus Reformierwasser Wasserdampf erzeugt;
einer Brennstoffzufuhrvorrichtung (11a1), die so konfiguriert ist, dass sie der Brennstoffzelle (34) den Brennstoff zuführt;
einer Verbrennungseinheit (36), die so konfiguriert ist, dass sie brennbares Gas, das aus der Brennstoffelektrode der Brennstoffzelle (34) herausgeführt wird, unter Verwendung des Oxidationsmittelgases verbrennt;
einer Zündvorrichtung (36a1, 36a2), die so konfiguriert ist, dass sie das brennbare Gas, das in die Verbrennungseinheit (36) eingeleitet wird, zündet, um die Verbrennungseinheit (36) anzufeuern; und
einer Steuerungsvorrichtung (15), die so konfiguriert ist, dass sie zumindest die Brennstoffzelle (34) steuert,
wobei die Steuerungsvorrichtung (15) Folgendes aufweist:
eine Brennstoff-Referenzdurchflussmengeneinstelleinheit (15b), die so konfiguriert ist, dass sie während eines Stromerzeugungsbetriebs des Brennstoffzellensystems (1) eine Soll-Durchflussmenge (Qft) an Brennstoff, der der Brennstoffzelle (34) zugeführt wird, auf der Grundlage einer Stromerzeugungsmenge der Brennstoffzelle (34) auf eine Brennstoff-Referenzdurchflussmenge (Qfk) einstellt, die eine Referenzdurchflussmenge an Brennstoff ist,
eine Ausgehbestimmungseinheit (15d), die so konfiguriert ist, dass sie bestimmt, ob ein Ausgehen, durch das ein Verbrennungszustand der Verbrennungseinheit (36) teilweise oder in seiner Gesamtheit aufgelöst wird, stattgefunden hat oder nicht, und
eine erste Zündeinheit (15e), die so konfiguriert ist, dass sie die Soll-Durchflussmenge (Qft) des Brennstoffs von der Brennstoff-Referenzdurchflussmenge (Qfk) aus, die durch die Brennstoff-Referenzdurchflussmengeeinstelleinheit (15b) eingestellt wird, schrittweise um einen Brennstofferhöhungsbetrag (Qfz) erhöht, der auf der Grundlage eines Luft-Brennstoff-Verhältnisses des Reformierausgangsmaterials eingestellt wird, und durch die Zündvorrichtung (36a1, 36a2) eine Zündung des brennbaren Gases vornimmt, falls während des Stromerzeugungsbetriebs des Brennstoffzellensystems (1) durch die Ausgehbestimmungseinheit (15d) bestimmt wird, dass das Ausgehen stattgefunden hat.

2. Brennstoffzellensystem (1) nach Anspruch 1,
wobei die Steuerungsvorrichtung (15) außerdem eine Anomalieerfassungseinheit (15f) aufweist, die so konfiguriert ist, dass sie erfasst, dass in dem Brennstoffzellensystem (1) eine Anomalie vorhanden ist, falls die Soll-Durchflussmenge (Qft) des Brennstoffs eine vorbestimmte Durchflussmenge erreicht, während die Verbrennungseinheit (36) auch nicht durch Zündung des brennbaren Gases durch die erste Zündeinheit (15e) angefeuert wird.

3. Brennstoffzellensystem (1) nach Anspruch 1 oder 2,
wobei die Steuerungsvorrichtung (15) außerdem eine Brennstoff-Durchflussmengenkorrektureinheit (15g) aufweist, die so gestaltet ist, dass sie die Brennstoff-Referenzdurchflussmenge (Qfk) korrigiert, falls sich während des Stromerzeugungsbetriebs des Brennstoffzellensystems (1) das Anfeuern der Verbrennungseinheit (36) und das Ausgehen der Verbrennungseinheit (36) innerhalb einer vorbestimmten Zeitdauer eine vorbestimmte Anzahl an Malen wiederholt.

4. Brennstoffzellensystem (1) nach einem der Ansprüche 1 bis 3,
wobei die Steuerungsvorrichtung (15) außerdem eine zweite Zündeinheit (115i) aufweist, die so konfiguriert ist, dass sie die Soll-Durchflussmenge (Qft) des Brennstoffs von der Brennstoff-Referenzdurchflussmenge (Qfk) aus, die durch die Brennstoff-Referenzdurchflussmengeneinstelleinheit (15b) eingestellt wird, schrittweise um einen Brennstoffverringerungsbetrag (Qfg) verringert, der auf der Grundlage des Luft-Brennstoff-Verhältnisses des Reformierausgangsmaterials eingestellt wird, und durch die Zündvorrichtung (36a1, 36a2) eine Zündung des brennbaren Gases vornimmt, falls die Verbrennungseinheit (36) auch nicht durch Zündung des brennbaren Gases durch die erste Zündeinheit (15e) angefeuert wird.

5. Brennstoffzellensystem (1) nach einem der Ansprüche 1 bis 3,
das außerdem eine Oxidationsmittelgaszufuhrvorrichtung (11c1) umfasst, die so konfiguriert ist, dass sie der Brennstoffzelle (34) das Oxidationsmittelgas zuführt,
wobei die Steuerungsvorrichtung (15) außerdem Folgendes aufweist:
eine Oxidationsmittelgas-Durchflussmengeneinstelleinheit (15c), die so konfiguriert ist, dass sie während des Stromerzeugungsbetriebs des Brennstoffzellensystems (1) eine Soll-Durchflussmenge (Qat) des Oxidationsmittelgases, das der Brennstoffzelle (34) zugeführt wird, auf der Grundlage der Stromerzeugungsmenge der Brennstoffzelle (34) auf eine Oxidationsmittelgas-Referenzdurchflussmenge (Qak) einstellt, die eine Referenzdurchflussmenge des Oxidationsmittelgases ist, und
eine dritte Zündeinheit (215m), die so konfiguriert ist, dass sie die Soll-Durchflussmenge (Qat) des Oxidationsmittelgases von der Oxidationsmittelgas-Referenzdurchflussmenge (Qak) aus, die durch die Oxidationsmittelgas-Durchflussmengeneinstelleinheit (15c) eingestellt wird, schrittweise um einen Lufterhöhungsbetrag (Qaz) erhöht, der auf der Grundlage des Luft-Brennstoff-Verhältnisses des Reformierausgangsmaterials eingestellt wird, und eine Zündung des brennbaren Gases durch die Zündvorrichtung (36a1, 36a2) vornimmt, falls die Verbrennungseinheit (36) auch nicht durch Zündung des brennbaren Gases durch die erste Zündeinheit (15e) angefeuert wird.

## Revendications

1. Système de pile à combustible (1) comprenant :
une pile à combustible (34) qui comporte une électrode à combustible à laquelle un combustible est amené et une électrode à comburant à laquelle un gaz comburant est amené et qui génère de la puissance électrique au moyen du combustible et du gaz comburant ;
une unité de reformage (33) configurée pour générer le combustible à partir de la matière première de reformage, qui est amenée d'une source d'alimentation (Gs), et de vapeur d'eau ;
une unité d'évaporation (32) configurée pour générer la vapeur d'eau à partir de l'eau de reformage ;
un dispositif d'alimentation en combustible (11a1) configuré pour alimenter la pile à combustible (34) en combustible ;
une unité de combustion (36) configurée pour brûler le gaz combustible guidé à l'extérieur de l'électrode à combustible de la pile à combustible (34) au moyen du gaz comburant ;
un dispositif d'allumage (36a1, 36a2) configuré pour allumer le gaz combustible introduit dans l'unité de combustion (36) pour démarrer l'unité de combustion (36) ; et
un dispositif de commande (15) configuré pour commander au moins la pile à combustible (34),
dans lequel le dispositif de commande (15) comporte :
une unité de réglage de débit de référence de combustible (15b) configurée pour régler un débit cible (Qft) de combustible amené à la pile à combustible (34) sur un débit de référence de combustible (Qfk) qui est un débit de référence de combustible sur la base d'une quantité de génération de puissance de la pile à combustible (34) durant une opération de génération de puissance du système de pile à combustible (1),
une unité de détermination de purge (15d) configurée pour déterminer si une purge, par laquelle un état de combustion de l'unité de combustion (36) est dissout en partie ou dans son intégralité, s'est produite ou non, et
une première unité d'allumage (15e) configurée pour augmenter progressivement le débit cible (Qft) du combustible par une quantité d'augmentation de combustible (Qfz), qui est réglée sur la base d'un rapport d'air et de combustible de la matière première de reformage, à partir du débit de référence de combustible (Qfk), qui est réglé par l'unité de réglage de débit de référence de combustible (15b), et pour effectuer l'allumage du gaz combustible au moyen du dispositif d'allumage (36a1, 36a2) dans un cas où il serait déterminé, par l'unité de détermination de purge (15d), que la purge s'est produite, durant l'opération de génération de puissance du système de pile à combustible (1).

2. Système de pile à combustible (1) selon la revendication 1,
dans lequel le dispositif de commande (15) comporte en outre une unité de détection d'anomalie (15f) configurée pour détecter qu'une anomalie est présente dans le système de pile à combustible (1) dans un cas où le débit cible (Qft) du combustible atteindrait un débit prédéterminé alors que l'unité de combustion (36) n'est pas démarrée y compris par l'allumage du gaz combustible par la première unité d'allumage (15e).

3. Système de pile à combustible (1) selon la revendication 1 ou 2,
dans lequel le dispositif de commande (15) comporte en outre une unité de correction de débit de combustible (15g) configurée pour corriger le débit de référence de combustible (Qfk), dans un cas où le démarrage de l'unité de combustion (36) et la purge de l'unité de combustion (36) seraient répétés un nombre de fois prédéterminé pendant une période prédéterminée durant l'opération de génération de puissance du système de pile à combustible (1).

4. Système de pile à combustible (1) selon l'une quelconque des revendications 1 à 3,
dans lequel le dispositif de commande (15) comporte en outre une deuxième unité d'allumage (115i) configurée pour diminuer progressivement le débit cible (Qft) du combustible par une quantité de diminution de combustible (Qfg), qui est réglée sur la base du rapport d'air et de combustible de la matière première de reformage, à partir du débit de référence de combustible (Qfk), qui est réglé par l'unité de réglage de débit de référence de combustible (15b), et pour effectuer l'allumage du gaz combustible au moyen du dispositif d'allumage (36a1, 36a2), dans un cas où l'unité de combustion (36) ne serait pas démarrée y compris par l'allumage du gaz combustible par la première unité d'allumage (15e).

5. Système de pile à combustible (1) selon l'une quelconque des revendications 1 à 3,
comprenant en outre un dispositif d'alimentation en gaz comburant (11c1) configuré pour amener le gaz comburant à la pile à combustible (34),
dans lequel le dispositif de commande (15) comporte en outre :
une unité de réglage de débit de gaz comburant (15c) configurée pour régler un débit cible (Qat) du gaz comburant, qui est amené à la pile à combustible (34), sur un débit de référence de gaz comburant (Qak), qui est un débit de référence du gaz comburant, sur la base de la quantité de génération de puissance de la pile à combustible (34) durant l'opération de génération de puissance du système de pile à combustible (1), et
une troisième unité d'allumage (215m) configurée pour augmenter progressivement le débit cible (Qat) du gaz comburant par une quantité d'augmentation d'air (Qaz), qui est réglée sur la base du rapport d'air et de combustible de la matière première de reformage, à partir du débit de référence de gaz comburant (Qak), qui est réglé par l'unité de réglage de débit de gaz comburant (15c), et pour effectuer l'allumage du gaz combustible au moyen du dispositif d'allumage (36a1, 36a2) dans un cas où l'unité de combustion (36) ne serait pas démarrée y compris par l'allumage du gaz combustible par la première unité d'allumage (15e).
